# EUROPÄISCHE PATENTSCHRIFT

(11) **EP 0 830 973 B1**
(45) Veröffentlichungstag und Bekanntmachung des Hinweises auf die Patenterteilung: **02.04.2003**
(21) Anmeldenummer: 97116352.2
(22) Anmeldetag: 19.09.1997
(51) Int. Cl.: B60N 2/44

(54) **Sitzpolsterteil, wie Tragelement und/oder Aufsatzelement**
Seat padding element, such as support element and/or auxiliary element
Elément de rembourrage de siège, tel qu'élément de support et/ou élément rapporté

(30) Priorität: 20.09.1996 AT 167096
(43) Veröffentlichungstag der Anmeldung: 25.03.1998
(73) Patentinhaber: Greiner Purtec GmbH, 4550 Kremsmünster (AT)
(72) Erfinder: Weingartner, Rudolf, Ing., 4501 Neuhofen a.d. Krems (AT); Möseneder, Johann, 4710 Grieskirchen (AT)
(74) Vertreter: Secklehner, Günter, Dr.

(56) Entgegenhaltungen:
- EP-A- 0 190 064
- WO-A-87/06894
- AT-B- 397 067
- DE-A- 4 209 468
- DE-A- 4 438 018
- DE-U- 8 506 816
- US-A- 5 405 178

## Beschreibung

Die Erfindung betrifft ein Tragelement, gemäß dem Oberbegriff des Anspruches 1, ein Aufsatzelement nach dem Oberbegriff des Anspruches 28, sowie einen Sitzpolster gemäß dem Oberbegriff des Anspruches 51.

Ein bekannter Sitz mit einem Polster - gemäß WO 87/06894 A1 der gleichen Anmelderin - besteht aus einem Schaumkunststoff mit einem einteiligen Stützkörper aus einem offenzelligen, elastischen Kunststoffschaum mit einem ersten Raumgewicht zwischen 40 kg/m³ und 80 kg/m³ und einer Flammschutzschicht aus einem offenzelligen, mit Flammschutzmittel versehenem, elastischen Schaumkunststoff mit einem zweiten zum ersten unterschiedlichen Raumgewicht. Dabei dient die Flammschutzschicht als zusätzliche Brandhemmschicht für den Stützkörper, der die gesamte vom Benutzer ausgeübte Sitzlast aufnehmen und abstützen muß. Der Kunststoffschaum und die Flammschutzschicht sind miteinander, insbesondere durch einen Schäümvorgang, verbunden und mit einem schwer entflammbaren Bezugsstoff umgeben. Um eine ausreichende Luftdurchlässigkeit eines derartigen Polsters zu erzielen, wurde auch vorgeschlagen, nach Fertigstellung des Polsters Nadeln hindurchzustoßen, sodaß ein entsprechender Luftaustausch möglich ist. Diese Polster haben sich in der Praxis an sich sehr gut bewährt, es hat sich jedoch gezeigt, daß vor allem bei extremen Witterungsbedingungen oder unter verschiedenen klimatischen Verhältnissen der Sitzkomfort der Sitze für den geplanten Einsatzzweck in Fahrzeugen nicht ausreichend war.

Weiters sind bereits Sitze für öffentliche Verkehrsmittel bekannt - gemäß DE 85 06 816 U - die einen Sitzpolster aufweisen, der mit einem Sitzbezug abgedeckt ist, wobei der Sitzbezug und der Sitzpolster aus einem schwer entflammbaren und raucharmen Material besteht. Vielfach wird dabei so vorgegangen, daß zwischen dem schwer entflammbaren Sitzbezug und dem meist aus Kunststoffschaum bestehenden Sitzpolster eine Glasfasermatte angeordnet wird, die ein Durchbrennen des Sitzbezuges in Richtung des Sitzpolsters verhindern soll. Dabei hat sich jedoch gezeigt, daß in vielen Fällen die Flammeinwirkung vom Boden her entsteht und der Kunststoffschaum des Sitzpolsters dazu neigt, unter starker Rauchentwicklung zu verbrennen, wodurch die öffentlichen Verkehrsmittel im Brandfall in kürzester Zeit so verqualmt sind, daß eine Orientierung für Insassen kaum mehr möglich ist. Dementsprechend ist bei diesem bekannten Sitz vorgesehen, daß unterhalb des Sitzpolsters in dem Traggestell des Sitzes eine feuerhemmende Platte angeordnet wird. Dies bedingt die Verwendung eines speziellen Profils zur Halterung des Sitzpolsters sowie einen zusätzlichen Aufwand durch die Anordnung der feuerhemmenden Platte. Auch bei dieser Ausführungsform konnte die Sitzbelüftung nicht befriedigen.

Sitze mit Polster aus Schaumkunststoff sind im modernen Fahrzeugbau sehr weit verbreitet. Vor allem werden sie in Schienen- und Straßenfahrzeugen aber in überwiegendem Maß auch in Flugzeugen eingesetzt. Während bereits die für Schienenfahrzeuge geltenden Vorschriften hinsichtlich der selbstverlöschenden Ausbildung der verwendeten Materialien bzw. der Rauchentwicklung sehr strenge Richtlinien vorschreiben, so werden diese von den in der Flugzeugindustrie geltenden Vorschriften aber noch überroffen. So ist bei für den Einsatz in Flugzeugen zugelassenen Sitzen eine Prüfung vorgeschrieben, bei der die Polster in ihrer zum Einbau vorgesehenen Ausstattung einer Flamme aus einem Brenner direkt ausgesetzt werden. Diese Flamme wirkt über eine Zeitdauer von 2 Minuten direkt auf den Polster ein, wonach die Flamme abgelöscht bzw. entfernt wird. Der Polster wird, falls bis dahin die Flammen nicht selbst erloschen sind, nach 5 Minuten gelöscht. Nach diesem Brandtest darf der Gewichtsverlust des Polsters nicht höher als 10 % sein. Um diese äußerst strengen Vorschriften zu erfüllen, gleichzeitig auch einen hohen Sitzkomfort in den Sitzen bei den lang andauernden Flugreisen und ein geringes Gewicht zu erzielen, wurden Sitzpolster aus verschiedenen, mit Flammschutzmitteln versehenen, offenzelligen, elastischen Weichschaumkunststoffen mit unterschiedlichen Raumgewichten zusammengeklebt.

Ein derartiger bekannter Fahrzeugsitz - gemäß EP 0 190 064 A1 - besteht aus mehreren Lagen Nadelvlies, die von einem flammfesten Bezugsstoff umhüllt sind. Zwischen dem Bezugsstoff und den einzelnen Lagen aus Nadelvlies sind zur Verringerung von Schäden durch Vandalen Verstärkungsmatten aus Metall bzw. Glasfasern angeordnet. Durch das Verkleben der einzelnen Schichten und die vielfachen Zwischenlagen dieser Vandalenschutzschicht ist bei dem bekannten Fahrzeugsitz eine ausreichende Durchlüftung noch kaum erzielbar.

Bei einem anderen bekannten Sitz für Flugzeuge ist, um die komplizierte räumliche Formgebung der Sitzpolster einfacher zu realisieren, der einteilige Stützkörper aus einem mit Flammschutzmitteln versetzten, in einer Form einstückig geschäumten Teil gebildet, dessen Oberfläche mit einer Flammschutzschicht und danach mit einem flammfesten Bezugsstoff überzogen wird. Mit den bekannten Sitzen konnten jedoch die neuen verschärften Sicherheitsbestimmungen und Prüfungsvorschriften für Flugzeugsitze sowie der Forderung nach kostengünstigen Reinigungs- und Wartungszeiten nicht erfüllt werden.

Weitere Sitzpolster, insbesondere für Flugzeugsitze, sind aus der DE 42 09 468 A1 sowie der DE 44 38 018 A1 bekannt geworden, bei welchen der Stützkörper des Sitzpolsters aus zumindest zwei zueinander unterschiedlichen Bauteilen gebildet ist, welche miteinander, insbesondere lösbar, verbunden sind. Dabei bildet ein Bauteil ein Tragelement sowie ein weiteres Bauteil ein Aufsatzelement. Das Tragelement kann seinerseits wiederum aus mehreren Teilen gebildet sein, wobei zumindest über einen Teilbereich der Dicke des Tragelementes und/oder des Aufsatzelementes zwischen einer vorderen und/oder einer hinteren Stirnkante des Tragund/oder Aufsatzelementes und etwa einem Mittelbereich derselben ein zusätzlicher Einsatzteil angeordnet ist. Dieser weist gegenüber dem Trag- und/oder Aufsatzelement eine höhere Härte auf, wobei das Raumgewicht des Einsatzteils geringer ist als das Raumgewicht des Tragelementes. Weiters ist es möglich, im Tragteil des Tragelementes eine zusätzliche Stützvorrichtung, wie insbesondere einen Federkern, anzuordnen.

Der vorliegenden Erfindung liegt die Aufgabe zugrunde, ein Aufsatzelement, ein Tragelement sowie einen daraus gebildeten Sitzpolster zu schaffen, welcher den außergewöhnlichen Belastungen von Sitzpolstern, insbesondere in öffentlichen Fahrzeugen, wie vor allem bei Flugzeugsitzen, gerecht wird, und dabei eine lange Lebensdauer, eine einfache Wartung sowie Reinhaltung gewährleistet und darüber hinaus bei einer Flammeinwirkung und dem damit verbundenen Abbrand nur eine geringe Rauchentwicklung verursacht.

Diese Aufgabe der Erfindung wird durch die Merkmale im Kennzeichenteil des Anspruches 1 gelöst. Vorteilhaft ist dabei, daß durch die funktionsmäßige Trennung des Sitzpolsters in ein Tragelement sowie ein Aufsatzelement jeweils die beiden Bauteile für sich in ihrer Funktion entsprechend optimal ausgestaltet bzw. ausgebildet werden können. Dadurch kann ein aufwendig sowie komfortmäßig besser ausgebildetes Tragelement geschaffen werden, welches gegenüber dem Aufsatzelement eine höhere Einsatzdauer aufweist, bei welchem auch noch sowohl der Sitzkomfort als auch die nötigen Abstütz- bzw. Sicherheitswerte während eines auftretenden Notfalls eingehalten werden können. Weiters wird durch die Wahl des Kunststoffschaumes ein angenehmer Sitzkomfort für den Benutzer erzielt, wobei im Zusammenwirken mit der gewählten Dichte bzw. dem Raumgewicht und den damit erzielbaren Härtewerten ein vollständiges Zusammensinken des Schaumgerüstes verhindert wird.

Vorteilhaft ist aber auch eine Materialauswahl nach Anspruch 2, da dadurch auch eine optimale Abstützung des gesamten Sitzpolsters an unterhalb desselben angeordneten Abstütz- bzw. Tragelementen erzielt wird, wobei zusätzlich noch ein Durchdringen von Tragteilen in Richtung des Benutzers vermieden bzw. verhindert wird.

Durch die Weiterbildung nach Anspruch 3 und 4 wird erreicht, daß bei länger andauernden ruhenden Belastungen eine flexible Schaumschicht zur Sitzkomfortverbesserung vorliegt, welche jedoch bei schlagartig auftretenden Belastungen ein hohes Absorptionsvermögen gegen auftretende Kräfte aufweist, wodurch eine gute Dämpfungswirkung für den Sitzpolster erzielt wird.

Vorteilhaft sind auch weitere Ausführungsformen nach den Ansprüchen 5 bis 9, da dadurch einerseits die Selbstverlöschungszeit des Kunststoffschaumes eingestellt und somit die Abbranddauer gesteuert werden kann und andererseits auch die strengen Grenzwerte für den Einsatzbereich eingehalten bzw. daran angepaßt werden können. Eine geringe bzw. eine helle Rauchentwicklung während des Abbrandes wird speziell durch den Zusatz von Melamin bzw. Melaminharz erzielt. Einfachste Flammhemmung wird auch durch den Zusatz von Graphit, insbesondere Blähgraphit, erzielt. Dadurch ist eine starke Verqualmung des Fahrzeuginnenraums, insbesondere der Flugzeugkabine unterbunden, wodurch in einem Notfall die Notausgänge besser und sicherer zu erkennen sind.

Vorteilhaft ist weiters eine Ausbildung nach Anspruch 10, da bedingt durch die Menge des zugesetzten Flammschutzmittels eine Optimierung des Bauteils in bezug von erzieltem Gewicht zu Abbrandwiderstand optimal erfolgen kann.

Durch die Ausbildung nach Anspruch 11 oder 12 ist es möglich, einerseits einen höheren Brandwiderstand bei Primärzündungen zu erzielen, wobei andererseits zusätzlich noch durch die freigesetzten Bestandteile ein hoher Sekundärlöscheffekt erzielt wird, durch welchen auch noch bedarfsweise externe Brandstellen eingedämmt bzw. abgelöscht werden können.

Vorteilhaft sind auch Ausbildungen nach den Ansprüchen 13 bis 16, da durch die spezielle Anordnung und Kombination im Bereich der Unterseite des Tragelementes ein Kombinationseffekt für die Abstützung des Sitzpolsters am Traggestell erzielbar ist, wodurch bei einem Zerbrechen des Schaumgerüstes eines der Bauteile vom Schaumgerüst des weiteren Bauteils auftretende Kräfte abgefangen werden und erst nach Überschreiten des Dämpfungsvermögen des weiteren Bauteils eine nochmalige Belastung des Schaumgerüstes des ersten Bauteils auftritt.

Gemäß den Ausbildungen, wie in den Ansprüchen 17 und 18 beschrieben, wird ein Zusammensinken des Schaumgerüstes während einer länger andauernden Benutzung verhindert, wodurch ein Zusammenkleben bzw. ein Anhaften einzelner Zellstege des Schaumgerüstes aneinander verhindert wird. Zusätzlich wird dadurch noch ein günstiges Sitzklima für den Benutzer erzielt.

Vorteilhaft sind auch Weiterbildungen nach den Ansprüchen 19 bis 27, da bedingt durch die unterschiedlichsten Anordnungsmöglichkeiten der Schutzschicht am Tragelement bzw. der dieses bildenden Bauteile die unterschiedlichsten Schutzwirkungen für den Schaumpolster, bei den unterschiedlichsten Belastungen, wie beispielsweise Brandbelastungen, möglich sind. Dadurch wird zusätzlich noch der Kunststoffschaum vor direkter Brandeinwirkung geschützt, um nicht unmittelbar der Flammbelastung ausgesetzt zu sein, wodurch auch eine zusätzliche Verringerung der Rauchentwicklung während des Abbrandes erzielbar ist.

Die Aufgabe der Erfindung wird aber eigenständig auch durch die Ausgestaltung des Aufsatzelementes gemäß dem Kennzeichenteil des Anspruches 28 gelöst. Bedingt durch die günstige Kombination von Raumgewicht zu Härte des Kunststoffschaumes wird ein optimales Verhältnis zwischen dem Gesamtgewicht des Bauteils und der zur Verfügung stehenden Masse, welche bei einem eventuellen Brandfall zum Abbrand zur Verfügung steht eingehalten, wobei zusätzlich noch bei Einhaltung der notwendigen Strauchhärte trotzdem ein guter Sitzkomfort für einen Benutzer erhalten bzw. gegeben ist, wodurch auch ein angenehmes Sitzklima bei lang andauernden Sitzbelastungen erhalten bleibt.

Vorteilhaft ist auch eine Weiterbildung nach Anspruch 29. Dadurch kann bedingt durch die unterschiedlichen Schäume eine einfache Anpassung an unterschiedliche Einsatzzwecke auf einfache Art und Weise erfolgen, wodurch auch eine Anpassung an spezielle Vorschriften bzw. Kundenwünsche einfach erfolgen kann.

Gemäß Anspruch 30 wird über den gesamten Bauteil ein einheitliches Schaumgewicht bzw. eine einheitliche Raumdichte über dessen gesamten Querschnitt erzielt.

Vorteilhaft sind auch weitere Ausführungsformen nach den Ansprüchen 31 bis 35, da dadurch einerseits die Selbstverlöschungszeit des Kunststoffschaumes eingestellt und somit die Abbranddauer gesteuert werden kann und andererseits auch die strengen Grenzwerte für den Einsatzbereich eingehalten bzw. daran angepaßt werden können. Eine geringe bzw. eine helle Rauchentwicklung während des Abbrandes wird speziell durch den Zusatz von Melamin bzw. Melaminharz erzielt. Einfachste Flammhemmung wird auch durch den Zusatz von Graphit, insbesondere Blähgraphit, erzielt. Dadurch ist eine starke Verqualmung des Fahrzeuginnenraums, insbesondere der Flugzeugkabine unterbunden, wodurch in einem Notfall die Notausgänge besser und sicherer zu erkennen sind.

Vorteilhaft ist weiters eine Ausbildung nach Anspruch 36, da bedingt durch die Menge des zugesetzten Flammschutzmittels eine Optimierung des Bauteils in bezug von erzieltem Gewicht zu Abbrandwiderstand optimal erfolgen kann.

Durch die Ausbildung nach Anspruch 37 oder 38 ist es möglich, einerseits einen höheren Brandwiderstand bei Primärzündungen zu erzielen, wobei andererseits zusätzlich noch durch die freigesetzten Bestandteile ein hoher Sekundärlöscheffekt erzielt wird, durch welchen auch noch bedarfsweise externe Brandstellen eingedämmt bzw. abgelöscht werden können.

Vorteilhaft sich auch Weiterbildungen nach den Ansprüchen 39 bis 48, da bedingt durch die unterschiedlichsten Anordnungsmöglichkeiten der Schutzschicht am Aufsatzelement bzw. des dieses bildenden Auflageteils die unterschiedlichsten Schutzwirkungen für den Schaumpolster, bei den unterschiedlichsten Belastungen, wie beispielsweise Brandbelastungen, möglich sind. Dadurch wird zusätzlich noch der Kunststoffschaum vor direkter Brandeinwirkung geschützt, um nicht unmittelbar der Flammbelastung ausgesetzt zu sein, wodurch auch eine zusätzliche Verringerung der Rauchentwicklung während des Abbrandes erzielbar ist.

Eine weitere vorteilhafte Ausbildung der Sitzpolsterteile ist im Anspruch 49 beschrieben, wobei speziell durch die Anordnung einer eigenen Zentrieranordnung zwischen dem Aufsatzelement und dem Tragelement eine exakte Positionierung der beiden Elemente zueinander möglich ist. Dadurch ist bedingt durch die bedarfsweise lösbare Halterung der beiden Bauteile zueinander ein einfacher Austausch gewährleistet.

Weitere Vorteile lassen sich gemäß Anspruch 50 durch die Anordnung zumindest eines Verbindungselementes zwischen den beiden Bauteilen, nämlich dem Aufsatzelement und dem Tragelement in Art einer gegenseitige Verbindung bzw. Halterung erzielen, wodurch für die Brandprüfungen jeweils nur ein einstückiger Stützkörper zu prüfen ist. Zusätzlich kann dadurch auch noch eine gegenseitige Arretierung bzw. Fixierung der beiden Elemente zueinander erfolgen.

Die Aufgabe der Erfindung wird aber unabhängig davon auch durch einen Sitzpolster, bestehend aus einem Aufsatzelement und einem Tragelement gemäß Anspruch 51 gelöst. Vorteilhaft ist bei einem derartig ausgebildeten Sitzpolster, daß dieser aus mehreren einzelnen Bauteilen bzw. Elementen gebildet ist, welche nach deren Einsatz bedarfsweise voneinander trennbar ausgebildet sind. Dadurch wird eine optimale Abstimmung der einzelnen Elemente in bezug auf deren Einsatzzweck ermöglicht und damit eine vielfältige Kombinationsmöglichkeit mit anderen Bauteilen bzw. Elementen geschaffen. Weiters ist dadurch auch ein einfacher Austausch von verbrauchten bzw. verschmutzten bzw. zerstörten Elementen durch neue möglich.

Schließlich sind auch Ausbildungen nach den Ansprüchen 52 bis 58 vorteilhaft, weil dadurch ein zusätzlicher Schutz der Sitzpolsterteile durch die mehrlagige Anordnung der Schutzschicht erzielt werden kann.

Die Erfindung wird im nachfolgenden anhand der in den Zeichnungen dargestellten Ausführungsbeispiele näher erläutert.

Es zeigen:
- Fig. 1: eine Doppelsitzbank mit erfindungsgemäß ausgebildeten Sitzpolstern in schaubildlich, vereinfachter Darstellung;
- Fig. 2: den Stützkörper des erfindungsgemäßen Sitzpolsters in schaubildlich, vereinfachter Darstellung;
- Fig. 3: eine mögliche Ausbildung eines erfindungsgemäßen Sitzpolsters in Seitenansicht, geschnitten und schematisch, vereinfachter Darstellung;
- Fig. 4: eine weitere mögliche Ausführungsform eines Tragelementes für einen erfindungsgemäßen Sitzpolster in Seitenansicht, geschnitten und schematisch, vereinfachter Darstellung;
- Fig. 5: eine andere mögliche Ausführungsform eines Tragelementes für den erfindungsgemäßen Sitzpolster in Seitenansicht, geschnitten, gemäß den Linien V - V in Fig. 6;
- Fig. 6: das Tragelement nach Fig. 5 in Stirnansicht, geschnitten, gemäß den Linien VI - VI in Fig. 5;
- Fig. 7: eine andere Ausführungsform eines erfindungsgemäßen Sitzpolsters in Seitenansicht und vereinfachter, schematischer Darstellung;
- Fig. 8: den Sitzpolster nach Fig. 7, in Ansicht von hinten, gemäß Pfeil VIII in Fig. 7;
- Fig. 9: eine mögliche weitere Ausführungsvariante des erfindungsgemäßen Sitzpolsters, in Seitenansicht, geschnitten und schematisch, vereinfachter Darstellung;
- Fig. 10: eine weitere Ausführungsvariante des erfindungsgemäßen Sitzpolsters, in Seitenansicht, geschnitten und schematisch, vereinfachter Darstellung;
- Fig. 11: eine andere Ausführungsform eines erfindungsgemäßen Sitzpolsters in Seitenansicht, geschnitten und vereinfachter, schematischer Darstellung;
- Fig. 12: eine mögliche Ausbildung eines weiteren erfindungsgemäßen Sitzposters in Seitenansicht, geschnitten und schematisch vereinfachter Darstellung;
- Fig. 13: eine andere mögliche Ausführungsform eines erfindungsgemäßen Sitzpolsters in Seitenansicht, geschnitten.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können.

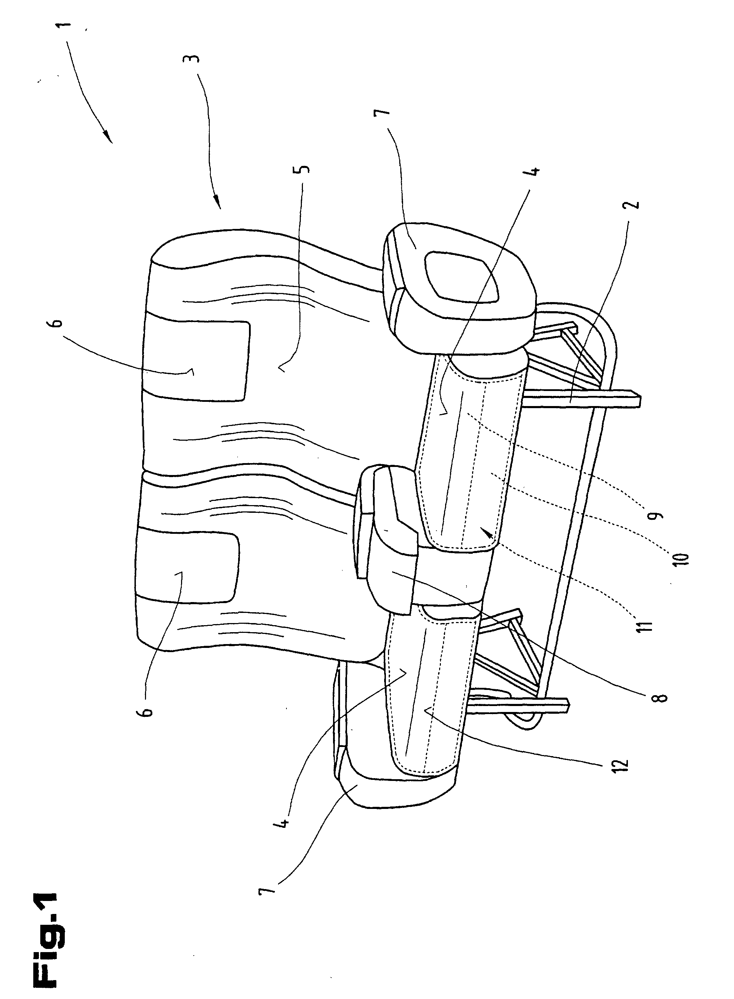

In der Fig. 1 ist ein Sitz 1, beispielsweise in einem öffentlichen Verkehrsmittel, wie z.B. ein Flugzeug oder dgl., schematisch, vereinfacht dargestellt. Es ist aber auch möglich, diesen Sitz 1, z.B. in anderen öffentlichen Verkehrsmitteln, wie Straßenbahn, Eisenbahnwaggons oder einem Autobus, einzusetzen. Dieser Sitz 1 besteht aus einem Traggestell 2 und einer aus mehreren Polstern bestehenden Polsterung 3, die wie beim dargestellten Ausführungsbeispiel aus einem Sitzpolster 4, einem Rückenpolster 5 sowie gegebenenfalls einem Kopfpolster 6 gebildet sein kann und sich zumindest bereichsweise am Traggestell 2 abstützt. Jeder dieser einzelnen Polster kann aus mehreren Bauteilen sowie zumindest einer dieser umgebenden Schutzschicht bestehen. Wie weiters schematisch angedeutet, weist der Sitz 1 weiters noch seitlich am Traggestell angeordnete Seitenwände 7 sowie gegebenenfalls eine zwischen den Polstern angeordnete Armlehne 8 auf. Dabei sei erwähnt, daß der hier dargestellte Sitz mit seinem Traggestell 2 nur vereinfacht, schematisch dargestellt ist und selbstverständlich jede andere Raumform, als die hier gezeigte, aufweisen kann. Weiters können die nachfolgend beschriebenen, unterschiedlichen Ausrührungsformen des Sitzpolsters 4 selbstverständlich auch beim Rückenpolster 5 und/oder Kopfpolster 6 Verwendung finden. Weiters wäre es aber auch unabhängig davon möglich, den Sitzpolster 4 einstückig mit dem Rückenpolster 5 sowie gegebenenfalls mit dem Kopfpolster 6 als Polsterung 3 auszubilden. Es kann aber auch der Rückenpolster 5 mit dem Kopfpolster 6 einen einstückigen Bauteil ausbilden.

Der Sitzpolster 4 ist als mehrlagiger bzw. mehrstückiger Bauteil in Form von zumindest einem Sitzpolsterteil ausgebildet und besteht aus einem hier vereinfacht dargestellten Aufsatzelement 9 sowie einem Tragelement 10, wobei jedes der einzelnen Elemente selbst wiederum aus mehreren Bauteilen zusammengesetzt sein kann. Wie hier weiters schematisch angedeutet, bilden das Aufsatzelement 9 sowie das Tragelement 10 einen Stützkörper 11, die den Sitzpolster 4 ausbilden, welcher von zumindest einer einlagigen Schutzschicht 12 zumindest bereichsweise abgedeckt ist. Die möglichen unterschiedlichen Ausbildungen des Stützkörpers 11 und der Schutzschicht 12 sowie deren Anordnung im Bereich des Stützkörpers 11 werden in den nachfolgenden Figuren noch detaillierter beschrieben werden.

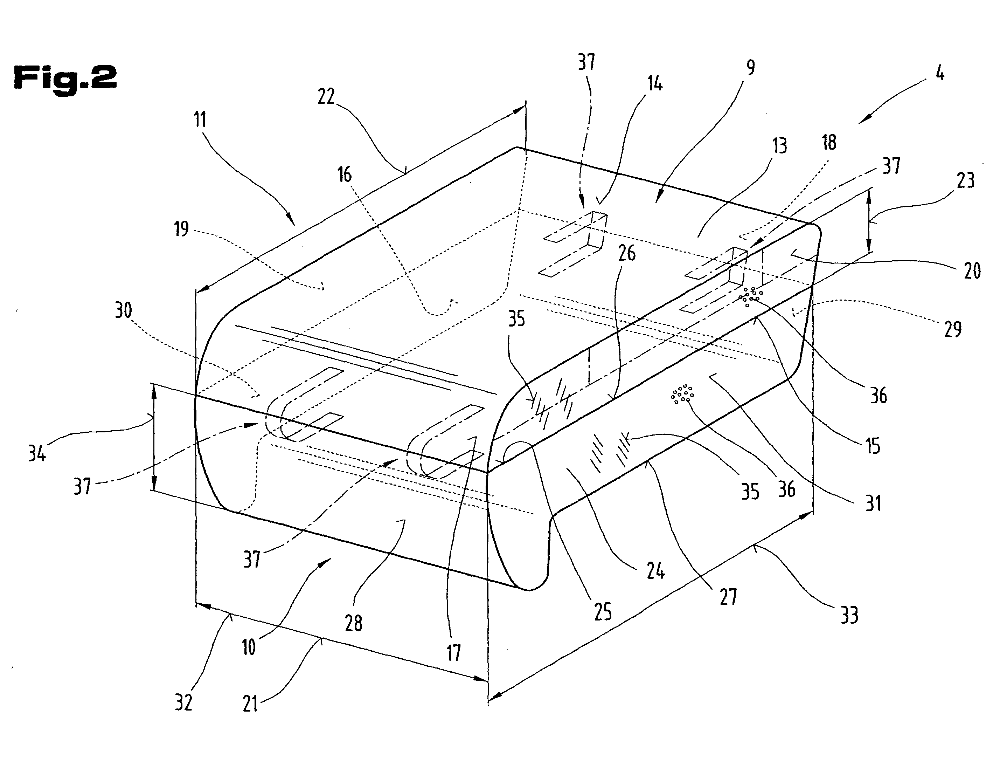

In der Fig. 2 ist der Stützkörper 11 für den Sitzpolster 4 in schaubildlich, vereinfachter Darstellung gezeigt.

Das Aufsatzelement 9 ist im vorliegenden Ausführungsbeispiel durch einen hier einteilig ausgebildeten Auflageteil 13 gebildet, welcher eine Oberseite 14, eine davon abgewandte Unterseite 15, welche eine Auflagefläche 16 ausbildet, sowie sich dazwischen erstreckende vordere bzw. hintere sowie seitliche Seitenflächen 17 bis 20 aufweist. Das Aufsatzelement 9 kann aber selbstverständlich auch aus mehreren einzelnen Bauteilen zusammengesetzt sein, wobei diese bevorzugt aus zueinander unterschiedlichen Kunststoffschäumen gebildet sind, welche nachfolgend noch detaillierter beschreiben werden und dies vereinfacht in strichpunktierten Linien im Bereich der Seitenfläche 20 angedeutet ist. So weist der Auflageteil 13 zwischen den seitlichen Seitenflächen 19, 20 eine Breite 21, zwischen der vorderen und hinteren Seitenfläche 17, 18 eine Länge 22 sowie zwischen der Oberseite 14 und der Unterseite 15 eine Höhe 23 auf. Dadurch ist der Auflageteil 13 sowohl in seiner Raumform als auch in seinen Abmessungen festgelegt.

Wie bereits zuvor beschrieben, kann das Tragelement 10 aus mehreren Bauteilen gebildet sein, wobei bei diesem Ausführungsbeispiel lediglich ein Tragteil 24 das Tragelement 10 ausbildet. Das Tragelement 10 weist wiederum eine Oberseite 25, welche eine Auflagefläche 26 für das Aufsatzelement 9 ausbildet, eine davon abgewendete Unterseite 27 sowie sich dazwischen erstreckende vordere bzw. hintere sowie seitliche Seitenflächen 28 bis 31 auf.

Das Tragelement 10 weist zwischen den beiden seitlichen Seitenflächen 30, 31 eine Breite 32 auf, welche bevorzugt gleich der Breite 21 ausgebildet ist. Weiters bildet sich zwischen der vorderen und der hinteren Seitenfläche 28, 29 eine Länge 33 aus, welche bevorzugt gleich oder kleiner der Länge 22 des Aufsatzelementes 9 ausgebildet sein kann. Zwischen der Oberseite 25 und der Unterseite 27 des Tragelementes 10 bildet sich eine Höhe 34 aus, welche somit im Zusammenwirken mit der Breite 32 und der Länge 33 die Raumform bzw. die Abmessungen des Tragelementes 10 festlegen. Die hier gezeigten Raumformen des Aufsatzelementes 9 bzw. Tragelementes 10 sind nur beispielhaft gewählt und können selbstverständlich beliebig gewählt werden.

Als Werkstoff für das Aufsatzelement 9 und/oder das Tragelement 10 bzw. die diese bildenden Bauteile werden die unterschiedlichsten Kunststoffschäume, wie z.B. aus Polyurethan (PUR), Polyethylen (PE), Polyimid (PI), Polyether, Silikon, Silikonelastomer, Memoryschaum und dgl., eingesetzt bzw. beliebig miteinander kombiniert, wobei der Memoryschaum ein Polyurethanschaum auf Esterbasis mit ausgeprägtem viscoelastischem Verhalten ist. So kann z.B. der Auflageteil 13 des Aufsatzelementes 9 durch einen Polyurethanschaum mit vorwiegend offenen Zellen gebildet sein und eine Dichte bzw. ein Raumgewicht zwischen 30 kg/m3 und 100 kg/m3, bevorzugt zwischen 40 kg/m3 und 70 kg/m3, aufweisen. Dabei ist es weiters vorteilhaft, wenn der Auflageteil 13 eine Härte zwischen 120 N und 450 N, bevorzugt zwischen 180 N und 220 N, bei einer bevorzugten Stauchhärte zwischen 1 kPa und 15 kPa, bei einer Eindrucktiefe von 40 % aufweist. Wird der Tragteil 24 z.B. auch aus einem Polyurethanschaum gebildet, so hat es sich als vorteilhaft erwiesen, wenn dieser eine Dichte bzw. ein Raumgewicht zwischen 15 kg/m3 und 90 kg/m3, bevorzugt zwischen 60 kg/m3 und 70 kg/m3, bei einer Härte zwischen 150 N und 550 N, bevorzugt 400 N, aufweist und die Stauchhärte 1 kPa bis 20 kPa, bevorzugt 5 kPa bis 10 kPa, bei 40 % Eindrucktiefe beträgt. Für die Ermittlung der Materialkennwerte, insbesondere für den Polyurethanschaum, findet für die Dichte bzw. das Raumgewicht die DIN 53 420, für die Härte die DIN 53 579 Verwendung. Für die Ermittlung des Druckverformungsrestes findet die DIN 53 572 Anwendung, wobei dabei die Werte zwischen 3 % und 10 %, bevorzugt zwischen 4 % und 6 %, betragen. Die Zugfestigkeit sowie die Bruchdehnung wird gemäß der DIN 53 571 ermittelt und soll zumindest 100 kPa, jedoch bevorzugt zwischen 140 kPa und 160 kPa bzw. mindestens 100 %, bevorzugt zwischen 130 % und 150 %, betragen. Der Dauerschwingversuch wird gemäß DIN 53 574 durchgeführt, wobei der Höhenverlust bzw. Dickenverlust maximal 5 %, bevorzugt jedoch 2 % bis 4 %, und der Härteverlust maximal 10 %, bevorzugt zwischen 4 % und 6 %, betragen soll. Die Heißdampfalterung wird gemäß der DIN 53 578 ermittelt, wobei die prozentuale Änderung der Eigenschaften maximal 20 %, bevorzugt jedoch 10 % bis 15 %, betragen soll. Nach Beendigung dieser Prüfung soll die Änderung der Stauchhärte maximal 25 %, die Zugfestigkeit mindestens 80 kPa und die Bruchdehnung mindestens 100 % betragen. Weiters soll der Probekörper keine Risse, Brüche oder einen Zerfall aufweisen.

Bei der Ermittlung der Hitzealterung gemäß DIN 53 578 soll der Probekörper ebenfalls keine Risse, Brüche sowie einen Zerfall wie auch die zuvor angegebenen Werte bei der Heißdampfalterung wiederum aufweisen. Um ein günstiges Sitzklima zu erreichen, soll die Luftdurchlässigkeit des Kunststoffschaumes bei einem Probekörper mit einer Abmessung von 50 mm x 50 mm x 25 mm ohne Haut (RG 60 - Index 90) einen Mindestwert von 15 l/min, bevorzugt jedoch 20 l/min bis 25 l/min, betragen. Für eventuell anfallende Reinigungszwecke ist es vorteilhaft, wenn der Kunststoffschaum eine gewisse Reinigungsmittelbeständigkeit gegenüber handelsüblichen Reinigungsmitteln aufweist. Um eine Maßhaltigkeit der Sitzpolster zu erhalten bzw. erreichen, soll der Schwund maximal 1,5 %, bevorzugt jedoch 1,2 %, betragen. Weiters sollen die Normwerte der Brandprüfung gemäß der Norm MVSS 302 - Typ SE und/oder gemäß FAR 25.853.b eingehalten werden. Zusätzlich sollen noch die Parameter für Rauch und Toxizität gemäß der Norm ATS 1000.001 eingehalten werden.

Wird ein Bauteil des Aufsatzelementes 9 und/oder des Tragelementes 10 aus einem Polyethylenschaum gebildet, so weist dieser eine Dichte bzw. ein Raumgewicht zwischen 15 kg/m3 und 50 kg/m3, bevorzugt 25 kg/m3, bei einer Härte zwischen 800 N und 4000 N auf, wobei die Stauchhärte zwischen 30 kPa und 100 kPa bei 40 % Eindrucktiefe beträgt. Die Schaumstruktur des Polyethylenschaumes ist bevorzugt geschlossenzellig gewählt. Der PE-Schaum kann durch Zumischung und/oder Imprägnierung flammgeschützt gemäß FAR 25.853.b für den Bunsenbrennertest ausgebildet werden. Sind hingegen einzelne Bauteile des Tragelementes 10 aus Memoryschaum gebildet, so weist dieser eine Dichte bzw. Raumgewicht zwischen 50 kg/m3 und 80 kg/m3, bevorzugt zwischen 60 kg/m3 und 70 kg/m3, bei einer Stauchhärte zwischen 6 kPa und 20 kPa bzw. auch zwischen 6 kPa und 25 kPa bei 40 % Eindrucktiefe auf. Es ist aber auch eine Stauchhärte zwischen 11 kPa und 25 kPa, bevorzugt zwischen 15 kPa und 20 kPa, bei 40 % Eindrucktiefe möglich. Dieser Memoryschaum ist zumeist handelsüblich ebenfalls flammhemmend gemäß MVSS 302 - Standard bzw. DIN 75 200 ausgebildet.

Eine Ermittlung der einzelnen Werkstoffparameter erfolgt für die Dichte bzw. das Raumgewicht gemäß der DIN 53 420 in einem Normalklima gemäß DIN 50 014-23/50, der Härte gemäß DIN 53 579 T sowie der Stauchhärte gemäß DIN 53 577. Eine Ermittlung weiterer Festigkeitskennwerte, wie der Zugfestigkeit bzw. der Bruchdehnung erfolgt gemäß DIN 53 571. Dabei sollen für die Zugfestigkeit Mindestwerte zwischen 65 kPa und 70 kPa von den einzelnen Schäumen erreicht werden. Bevorzugt jedoch werden Zugfestigkeitswerte zwischen 90 kPa und 100 kPa angestrebt, um bei den hergestellten Teilen den hohen mechanischen Belastungen entsprechen zu können. Eine Bruchdehnung der einzelnen Schäume soll in ihren Mindestwerten zwischen 55 % und 60 % und bei höheren Anforderungen bevorzugt zwischen 65 % und 70 % betragen. Weiters soll ein Weiterreißwiderstand gemäß DIN 53 575 der Kunststoffschäume einen Mindestwert zwischen 2,0 N/cm und 2,5 N/cm, bevorzugt jedoch 5,0 N/cm, betragen. Für die Ermittlung der zuvor genannten Festigkeitskennwerte wird ein Prüfkörper RG 65, Index 90 verwendet.

Die Parameter für den Druckverformungsrest werden gemäß der Norm DIN 53 572 ermittelt und sollen in Ihren Maximalwerten zwischen 7 % und 9 %, bevorzugt jedoch zwischen 5 % und 7 %, betragen. Der Dauerschwingversuch wird gemäß der DIN 53 574 durchgeführt, wobei der Dickenverlust maximal 5%, bevorzugt jedoch 3 %, und der Härteverlust maximal 10 %, bevorzugt jedoch 7 %, betragen soll, wobei zusätzlich noch keine sichtbaren Zerstörungen des Schaumgerüstes erfolgen sollen. Die Parameter für die Belastungsfederkennlinien werden gemäß der DIN 53 576 C ermittelt, wobei die Werte für T0 = 100%, für T2 = 60%, für T4 = 32%, für T8 = 23 % und für T10 = 29% betragen sollen. Zusätzlich wird die Eindrückhärtecharakteristik gemäß der DIN 53 576 B mit einem Prüfkörper RG 65, Index 90, mit einer Probenabmessung von 38 cm x 38 cm x 5 cm ermittelt, wobei gemäß dem durchgeführten Normversuch die Zunahme der Kraft bei 25 % der Eindrucktiefe maximal 14 %, bevorzugt 10 %, bei 40 % Eindrucktiefe maximal 15 %, bevorzugt 12 %, und bei 65 % Eindrucktiefe maximal 19 %, bevorzugt jedoch 16 %, betragen soll.

Um den strengen Prüfnormen bzw. Anforderungen der Sitzpolster 4, insbesondere beim Kerosinbrennertest bzw. beim Bunsenbrennertest zu entsprechen, hat es sich als günstig erwiesen, dem Aufsatzelement 9 und/oder dem Tragelement 10 bzw. einzelnen Bauteilen davon zumindest ein Flammschutzmittel zuzusetzen. Dies kann z.B. ein pulverförmiges Flammschutzmittel 35 sein, wie dies schematisch bereichsweise in kurzen Strichen im Bereich der Seitenfläche 20 des Auflageteils 13 bzw. der Seitenfläche 31 des Tragelementes 10 angedeutet ist, welches den einzelnen zuvor genannten Schäumen zugesetzt wird. Dabei kann das pulverförmige Flammschutzmittel 35 durch Melamin, Melaminharz, Aluminiumhydroxid, Amoniumpolyphosphat, Kohlenstoff, Graphit bzw. ein Hydrat eines Zinksalzes usw. bzw. einer beliebigen Mischung daraus gebildet sein. Die Menge des dabei zugesetzten, pulverförmigen Flammschutzmittels 35 beträgt zwischen 15 Gewichtsteilen und 50 Gewichtsteilen, bevorzugt zwischen 20 Gewichtsteilen und 40 Gewichtsteilen, im fertig geschäumten Zustand der Schaumstruktur eines Bauteils. Weiters kann auch ein flüssiges Flammschutzmittel 36 den einzelnen zuvor genannten Schäumen zugesetzt bzw. beigefügt werden, welches wiederum bereichsweise schematisch durch kleine Ringe im Bereich der Seitenfläche 20 des Auflageteils 13 bzw. der Seitenfläche 31 des Tragelementes 10 angedeutet ist und bevorzugt durch organische Phosphorsäure-Verbindungen in einer Menge zwischen 1 Gewichtsteil und 20 Gewichtsteilen, bevorzugt zwischen 5 Gewichtsteilen und 12 Gewichtsteilen, je Bauteil beträgt. Bedingt durch den Zusatz des pulverförmigen Flammschutzmittels 35 und/oder des flüssigen Flammschutzmittels 36 soll ein Brandverhalten gemäß DIN 5510 T3 größer S3 sein und bevorzugt ein Bestehen des gesamten Bauteils erfolgen. Weiters soll bevorzugt das Brandverhalten der einzelnen Schaumteile gemäß der Norm F 16 101 entweder M4/F2 oder M2/F3 betragen. Wird hingegen das Brandverhalten gemäß der Norm BS 5852 geprüft, so soll ein Mindestwert von CRIB 7 erreicht werden.

Die zuvor beschriebenen unterschiedlichen Kunststoffschäume können durch die unterschiedlichen Flammschutzmittel flammgeschützt werden, wobei dabei das Flammschutzmittel entweder direkt dem Kunststoffschaum zugesetzt und/oder der Kunststoffschaum mit diesem imprägniert wird. Je nach dem verwendeten Kunststoffschaum und der Anordnung des einzelnen Bauteils innerhalb des Sitzpolsters 4 können wiederum unterschiedliche Flammschutzmittel verwendet werden, wobei diese sich in ihrer Wirkungsweise voneinander grundsätzlich unterscheiden. Die auf der Basis eines Hydrats bzw. eines Hydroxydes basierenden Flammschutzmittel, wie z.B. Aluminiumhydroxyd oder ein Hydrat eines Zinksalzes, benötigen für deren Aufspaltung eine hohe Wärmemenge, welche Sie bei einer auftretenden Brandbelastung dem Kunststoffschaum bzw. seiner Umgebung entziehen und welche bei erfolgter Aufspaltung Wasser bzw. Wasserdampf freisetzen. Andere Flammschutzmittel können, z.B. bei Temperaturerhöhung, Stickoxyde freisetzende Bestandteile aufweisen, zu welchen z.B. die zuvor beschriebenen Flammschutzmittel, nämlich Melamin, Melaminharze und Amoniumpolyphosphat, zählen. Diese Flammschutzmittel können zusätzlich noch den Schmelzpunkt des Schaumes heruntersetzen, wodurch ein Abtropfen bzw. Wegfließen desselben erfolgt und so der Kunststoffschaum dem Flammenherd entzogen wird.

Andere Flammschutzmittel hingegen können bei Temperaturerhöhung volumenvergrößernd ausgebildet sein, zu welchen z.B. Kohlenstoff, Graphit usw. zählen, welche bedingt durch ihre Volumenvergrößerung eine Art Barriere bzw. Isolationsschicht zwischen der Wärmequelle und dem Kunststoffschaum aufbauen und so diesen wiederum vor einem Abbrand schützen. Andere Flammschutzmittel hingegen können bei Temperaturerhöhung Halogene freisetzende Bestandteile aufweisen, zu welchen z.B. organische Phosphorverbindungen zählen, und bevorzugt flüssig ausgebildet sein.

Um bei einer eventuellen Hitze bzw. Brandeinwirkung auf den Sitzpolster 4 eine geringe Rauchentwicklung zu erzielen, soll eine Rauchgasdichte gemäß der Norm BS 6853 einen Mindestwert von B 5.3 (bei 3 Meter cube-Test) erreicht werden. Gemäß dieser Norm soll für die Rauchgasdichte ein Mindestwert von Ao kleiner 9 bzw. kleiner 6 erreicht werden.

Zusätzlich wird der Sitzpolster 4 zur Bestimmung des Brennverhaltens von Werkstoffen gemäß der DIN 75 200 bzw. gemäß der MVSS 302 (Federal Safety Standards) bzw. einzelne Bauteile des Sitzpolsters geprüft.

Weiters hat es sich als vorteilhaft erwiesen, wenn das Aufsatzelement 9 mit seiner Unterseite 15 bzw. der diese bildenden Auflagefläche 16 bedarfsweise lösbar mit der Oberseite 25 bzw. der diese bildenden Auflagefläche 26 des Tragelementes 10 verbunden ist. Die Verbindung der einzelnen Auflageflächen 16 bzw. 26 miteinander kann beispielsweise durch eine Kleberschicht, Klettbänder usw. erfolgen, welche entweder nur bereichsweise oder gegebenenfalls vollflächig zwischen den Auflageflächen 16, 26 angeordnet sind. Dabei hat es sich als vorteilhaft erwiesen, das Aufsatzelement 9 und das Tragelement 10 nur im Randbereich der einander zugewandten Seitenflächen 17 bis 20 bzw. 28 bis 31 sowie gegebenenfalls in einem Mittelbereich der einander zugewandten Auflageflächen 16, 26 miteinander zu verbinden. Durch diese Anordnung ist ein gegenseitiges Verschieben der einzelnen Elemente gegeneinander verhindert, wodurch bei den unterschiedlichen Brandtests lediglich stets ein einstückiger Bauteil zu prüfen ist.

Wie weiters schematisch im Bereich der vorderen Seitenflächen 17 bzw. 28 sowie der hinteren Seitenflächen 18 bzw. 29 in strichpunktierten Linien angedeutet ist, kann zusätzlich bei der Herstellung des Aufsatzelementes 9 bzw. des Tragelementes 10 zumindest an einer der Seitenflächen 17 bis 20 bzw. 28 bis 31 zumindest ein Verbindungselement 37 zur zusätzlichen Verbindung des Aufsatzelementes 9 mit dem Tragelement 10 angeordnet sein, um einen einstückigen Sitzpolster 4 auszubilden.

Dieses Verbindungselement 37 bzw. die Verbindungselemente 37 können z.B., wenn einzelne Bauteile des Aufsatzteils 9 bzw. des Tragelementes 10 durch einen Formschaum gebildet sind, bereits in die Form mit eingebracht werden und so in den Schaum aus Kunststoff während des Schäumvorganges miteingebettet werden.

Weiters wäre es aber auch möglich, die Verbindungselemente 37 im Bereich zwischen den Seitenflächen 17 bis 20 bzw. 28 bis 31 diese übergreifend anzuordnen und daran zu befestigen. Dies kann z.B. durch eine Verklebung und/oder einen Anschäumvorgang im Bereich der Oberfläche erfolgen. Zusätzlich dazu wäre es aber auch möglich, einen Endbereich des Verbindungselementes innerhalb eines der Bauteile aus Kunststoffschaum mit einzubetten und an dem anderen, mit dem zu verbindenden Bauteil an der Oberfläche zu befestigen. Es ist aber auch möglich, das Verbindungselement 37 zweiteilig auszubilden und jeweils in einem der Bauteile des Aufsatzelementes 9 bzw. des Tragelementes 10 mit einzubetten und während der Sitzendfertigung z.B. die beiden aus dem Schaum herausragenden Endbereiche wiederum miteinander zu verbinden.

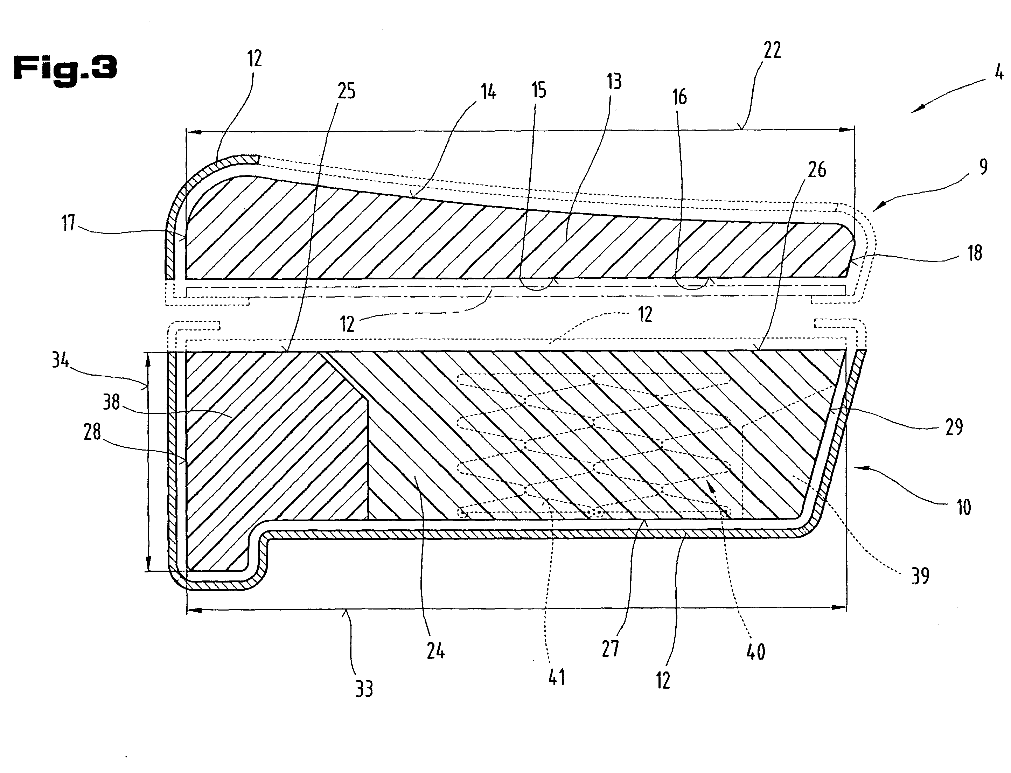

In der Fig. 3 ist eine weitere mögliche Ausbildung eines Sitzpolsters 4 in vereinfachter Darstellung gezeigt, wobei für gleiche Teile gleiche Bezugszeichen wie in den Fig. 1 und 2 verwendet werden. Bei der hier gewählten Darstellung ist das Aufsatzelement 9 distanziert vom Tragelement 10 dargestellt, um die Anordnung der Schutzschicht 12 am Aufsatzelement 9 bzw. Tragelement 10 besser darstellen und beschreiben zu können.

So besteht das Aufsatzelement 9 wiederum aus dem Auflageteil 13, welcher beispielsweise wiederum aus einem der zuvor beschriebenen Kunststoffschäume, insbesondere aus einem Polyurethanschaum mit vorwiegend offenen Zellen, gebildet ist.

Der Auflageteil 13 ist dabei zumindest bereichsweise von der zumindest einlagigen Schutzschicht 12 abgedeckt, wobei diese zumindest im Bereich einer der Seitenflächen 17 bis 20 - beim vorliegenden Ausführungsbeispiel im Bereich der Seitenfläche 17 - angeordnet ist. Selbstverständlich ist es aber auch möglich, mehrere der Seitenflächen 17 bis 20 oder alle Seitenflächen 17 bis 20 mit der Schutzschicht 12 abzudecken. Weiters ist es aber auch möglich, die Schutzschicht 12 ausgehend von zumindest einer der Seitenflächen 17 bis 20 derart anzuordnen, daß diese bereichsweise die Oberseite 14 des Auflageteils 13 übergreift. So kann sich beispielsweise die Schutzschicht 12 im Bereich der Seitenfläche 17 über die volle Breite 21 des Auflageteils 13 erstrecken und beispielsweise bündig mit den seitlichen Seitenflächen 19, 20 abschließen. Ausgehend von der Seitenfläche 17 kann sich die Schutzschicht 12 zumindest bereichsweise über die Länge 22 erstrecken und beispielsweise vor der hinteren Seitenfläche 18 enden. Dadurch bildet sich ein Scheuerschutz für das Schaumgerüst des Auflageteils 13 aus.

Weiters ist es aber unabhängig davon auch möglich, daß die Schutzschicht 12 die vordere Seitenfläche 17, die Oberseite 14 sowie die hintere Seitenfläche 18 abdeckt. Zusätzlich zu den zuvor beschriebenen Ausführungsformen ist es aber auch möglich, daß die Schutzschicht 12 auch im Bereich der beiden seitlichen Seitenflächen 19, 20 angeordnet ist. Durch die zuvor beschriebene Ausbildung ergibt sich - bis auf die Unterseite 15 - eine allseitige Umschließung bzw. Einhüllung des Auflageteils 13.

Die einzelnen aus den einzelnen Kunststoffschäumen gebildeten Bauteile des Sitzpolsters 4 können entweder durch einen Blockschaum bzw. einen Formschaum gebildet sein, wobei dessen Auswahl vom jeweiligen Einsatzzweck abhängig ist. Weiters können auch Heißund/oder Kaltschäume eingesetzt werden.

Selbstverständlich ist es aber auch möglich, daß die Schutzschicht 12 ausgehend von zumindest einer der Seitenflächen 17 bis 20 zumindest bereichsweise die Unterseite 15 bzw. die Auflagefläche 16 des Auflageteils 13 übergreift, wie dies bereits auch für die Oberseite 14 des Auflageteils 13 beschrieben worden ist.

Unabhängig davon ist es aber auch möglich, die Schutzschicht 12 mehrteilig auszubilden und beispielsweise einen Teil davon im Bereich der Oberseite 14 und den anderen Teil zumindest an einer der Seitenflächen 17 bis 20 anzuordnen. Zusätzlich dazu bzw. nur in Kombination mit zumindest einer der Seitenflächen 17 bis 20 kann aber auch ein weiterer Teil der Schutzschicht 12 im Bereich der Unterseite 15 am Auflageteil 13 angeordnet sein, wie dies in strichpunktierten Linien dargestellt ist. Als vorteilhaft kann es sich bei den zuvor beschriebenen Ausführungen der Anordnung der Schutzschichten 12 erweisen, wenn sich die Schutzschichten 12 im Bereich zwischen den Seitenflächen 17 bis 20 und der Oberseite 14 und/oder der Unterseite 15 einander gegenseitig überlappen.

Das hier dargestellte Tragelement 10 besteht bei diesem Ausführungsbeispiel aus zumindest zwei Bauteilen, nämlich dem Tragteil 24 sowie einem im Bereich der vorderen Seitenfläche 28 angeordneten Einsatzteil 38, welcher sich ausgehend von der vorderen Seitenfläche 28 über einen Teilbereich der Länge 33 in Richtung der hinteren Seitenfläche 29 des Tragelementes 10 erstreckt. Zusätzlich dazu kann aber auch, wie dies im Bereich der hinteren Seitenfläche 29 des Tragteils 24 durch strichlierte Linien vereinfacht dargestellt ist, ein weiterer Einsatzteil 39 angeordnet sein, wobei sich dieser im Gegensatz zum vorderen Einsatzteil 38 nur über einen Teilbereich der Höhe 34 des Tragelementes 10 erstreckt. Unabhängig davon ist es aber auch möglich, nur einen einzigen Einsatzteil 38 ausgehend von der vorderen Seitenfläche 28 bis hin zur hinteren Seitenfläche 29 am und/oder im Tragteil 24 anzuordnen, wobei sich dieser entweder über die volle Breite 32 oder nur über einen Teilbereich derselben erstreckt. Bevorzugt werden die Einsatzteile 38, 39 aus dem zuvor beschriebenen Polyethylenschaum gebildet und vorzugsweise im Bereich von Abstützelementen des Traggestells 2 im Bereich des Sitzpolsters 4 angeordnet.

Es ist aber unabhängig davon auch möglich, den Sitzpolster 4 nur aus dem Auflageteil 13 aus Polyurethan und einem Tragelement 10, welches aus einem einzigen Einsatzteil 38 bzw. 39 besteht, zu bilden.

Als vorteilhafte Weiterbildung kann bei dem in der Fig. 3 dargestellten Ausführungsbeispiel für das Tragelement 10 in dessen Tragteil 24 aus Polyurethanschaum im Bereich der größten Sitzbelastung im Schaum eine Stützvorrichtung 40 angeordnet bzw. in diesen eingebettet oder eingesetzt sein, welche beispielsweise durch einen Federkern 41 gebildet ist. Dieser Federkern kann aus den unterschiedlichsten Werkstoffen, wie beispielsweise Federstahl, nichtrostender Stahl mit federnden Eigenschaften usw., gebildet sein. Es ist aber auch möglich, daß die Stützvorrichtung 40 beispielsweise durch einen Kunststoffschaum mit höherer Härte, wie beispielsweise einen Polyethylenschaum, gebildet ist. Die einzelnen zuvor beschriebenen Bauteile, welche das Tragelement 10 ausbilden und insbesondere durch den Tragteil 24 sowie zumindest einen der Einsatzteile 38 oder 39 gebildet sind, bilden das einstückige Tragelement 10 aus. Die Verbindung der einzelnen Bauteile untereinander kann entweder durch die unterschiedlichsten Verbindungsschichten, wie beispielsweise Kleberschichten, oder durch Anform vorgänge, wie beispielsweise einem Anschäumen, erfolgen.

Das hier dargestellte Tragelement 10 bzw. das dieses bildende Bauteil ist zumindest bereichsweise von der zumindest einlagigen Schutzschicht 12 abgedeckt, wobei bevorzugt die Schutzschicht 12 im Bereich der Unterseite 27 des Tragelementes 10 angeordnet ist. Weiters kann die Schutzschicht 12 auch zumindest im Bereich einer der Seitenflächen 28 bis 31 des Tragelementes 10 angeordnet sein und bedarfsweise ausgehend von zumindest einer der Seitenflächen 28 bis 31 bereichsweise die Oberseite 25 des Tragelementes 10 übergreifen. Unabhängig davon ist es aber auch möglich, die Schutzschicht 12 zusätzlich im Bereich der Oberseite 25 des Tragelementes 10 anzuordnen, um so eine vordefinierte Ablöseebene zwischen den beiden mittels der lösbaren Verbindungsvorrichtung miteinander verbundenen und einander zugewandten Auflageflächen 16 bzw. 26 zu schaffen.

Als vorteilhaft hat es sich weiters erwiesen, wenn sich die zwei Schutzschichten im Bereich zwischen den Seitenflächen 28 bis 31 und der Oberseite 25 und/oder der Unterseite 27 einander überlappen bzw. durchgängig ausgebildet sind. Weiters kann es vorteilhaft sein, wenn die Schutzschicht 12 sowohl die Unterseite 27, die Seitenflächen 28 bis 31, als auch gegebenenfalls bereichsweise die Oberseite 25 des Tragelementes 10 abdeckt. Dadurch ist bis auf einen gewissen Teilbereich der Oberseite 25 eine allseitige Einhüllung bzw. Umschließung des Tragelementes 10 durch die Schutzschicht 12 gegeben.

Die Ausbildung der Schutzschicht 12 sowie deren Verbindung mit dem Tragelement 10 bzw. Aufsatzelement 9 wird in den nachfolgenden Figuren noch detaillierter beschrieben werden.

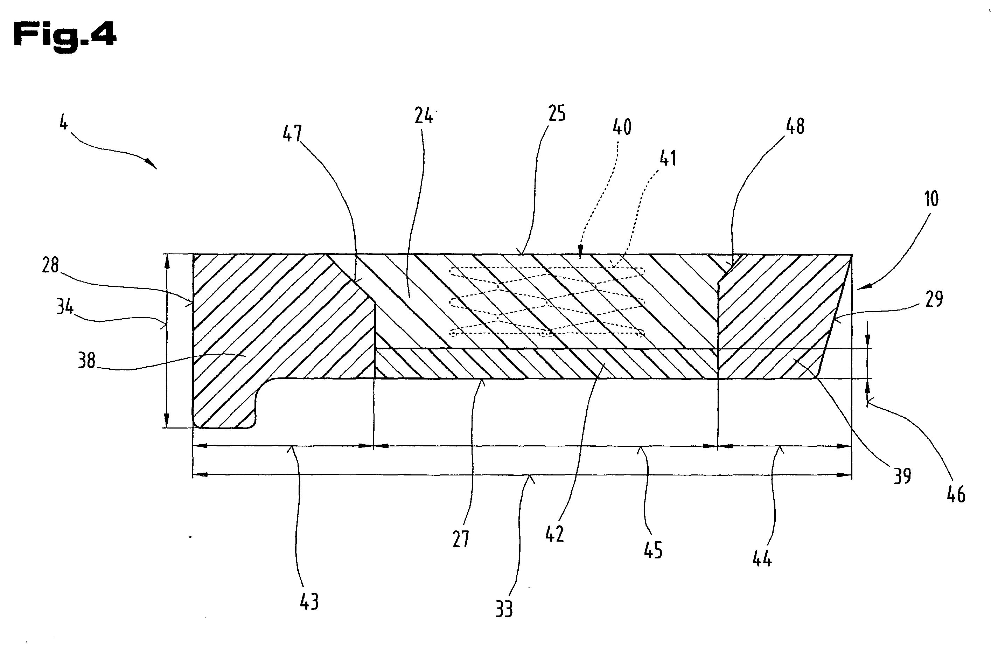

In der Fig. 4 ist eine weitere mögliche Ausbildung des Tragelementes 10 für den Sitzpolster 4 gezeigt, wobei wiederum für gleiche Teile gleiche Bezugszeichen wie in den Fig. 1 bis 3 verwendet werden. Um unnötige Wiederholungen zu vermeiden, wird für die Anordnung der Schutzschicht 12 sowie des Aufsatzelementes 9, welche hier nicht dargestellt worden sind, auf die detaillierte Beschreibung in den anderen Figuren verwiesen.

Das in dieser Figur dargestellte Tragelement 10 ist wiederum aus mehreren Bauteilen zu dem einstückigen Tragelement 10 zusammengesetzt. Zusätzlich zu den in der Fig. 3 dargestellten Einsatzteilen 38, 39 ist im Bereich des Tragteils 24 ein weiterer Einsatzteil 42 im Bereich der Unterseite 27 des Tragelementes 10 angeordnet, welcher sich zwischen dem vorderen Einsatzteil 38 und dem hinteren Einsatzteil 39 erstreckt. Wie bereits zuvor beschrieben, können sich die einzelnen Einsatzteile 38, 39, 42 sowohl über die gesamte Breite 32 des Tragelementes 10 als auch nur über einen Teilbereich derselben erstrecken, wobei dabei in bezug auf die Breite 32 bevorzugt eine mittige Ausrichtung der Einsatzteile 38, 39, 42 gewählt wird.

Das Tragelement 10 weist zwischen der vorderen und hinteren Seitenfläche 28, 29 die Länge 33 auf, wobei sich der vordere Einsatzteil 38 ausgehend von der vorderen Seitenfläche 28 in Richtung der hinteren Seitenfläche 29 über eine Länge 43, der hintere Einsatzteil 39 ausgehend von der hinteren Seitenfläche 29 in Richtung der vorderen Seitenfläche 28 über eine Länge 44 und der zwischen dem vorderen und hinteren Einsatzteil angeordnete Einsatzteil 42 über eine Länge 45 erstreckt. In Summe bilden die Längen 43 bis 45 die gesamte Länge 33 des Tragelementes 10 aus. Wie weiters aus dieser Darstellung zu ersehen ist, erstreckt sich der vordere sowie der hintere Einsatzteil 38, 39 über die volle Höhe 34 zwischen der Oberseite 25 und der Unterseite 27 des Tragelementes 10, wobei sich der weitere Einsatzteil 42 über eine Höhe 46 ausgehend von der Unterseite 27 in Richtung der Oberseite 25 erstreckt, welche geringer der Höhe 34 ist.

Durch die Anordnung des zusätzlichen Einsatzteils 42 im Bereich der Unterseite 27 des Tragelementes 10 erfolgt eine weitere Auflageverstärkung des gesamten Tragelementes 10, wenn dieser beispielsweise über die gesamte Oberfläche der Unterseite 27 an einem durchlaufenden Traggestell 2 des Sitzes 1 abgestützt ist. Um eine Verbesserung des Sitzkomforts zu erreichen, weist sowohl der vordere als auch der hintere Einsatzteil 38, 39 an den dem Tragteil 24 zugewandten Flächen jeweils eine Abstützfläche 47, 48 auf, welche jeweils auf eine vom Tragteil 24 abgewandte Seite geneigt verlaufend ausgebildet sind. Dadurch wird im Sitzbereich des Tragteils 24 ein weicherer und komfortablerer Übergang hin zu den härter ausgebildeten Einsatzteilen 38, 39 ausgehend vom Tragteil 24 geschaffen, wodurch eine Sitzkomfortverbesserung auftritt. Zusätzlich kann, wie dies bereits in der Fig. 3 beschrieben worden ist, wiederum im Tragteil 24 die Stützvorrichtung 40 beispielsweise in Form des Federkerns 41 angeordnet bzw. in diesen eingebettet sein.

Es ist aber selbstverständlich auch möglich, die Stützvorrichtung 40 nicht nur im Tragteil 24 des Tragelementes 10, sondern auch in jedem beliebigen anderen das Tragelement 10 bildenden Bauteil anzuordnen.

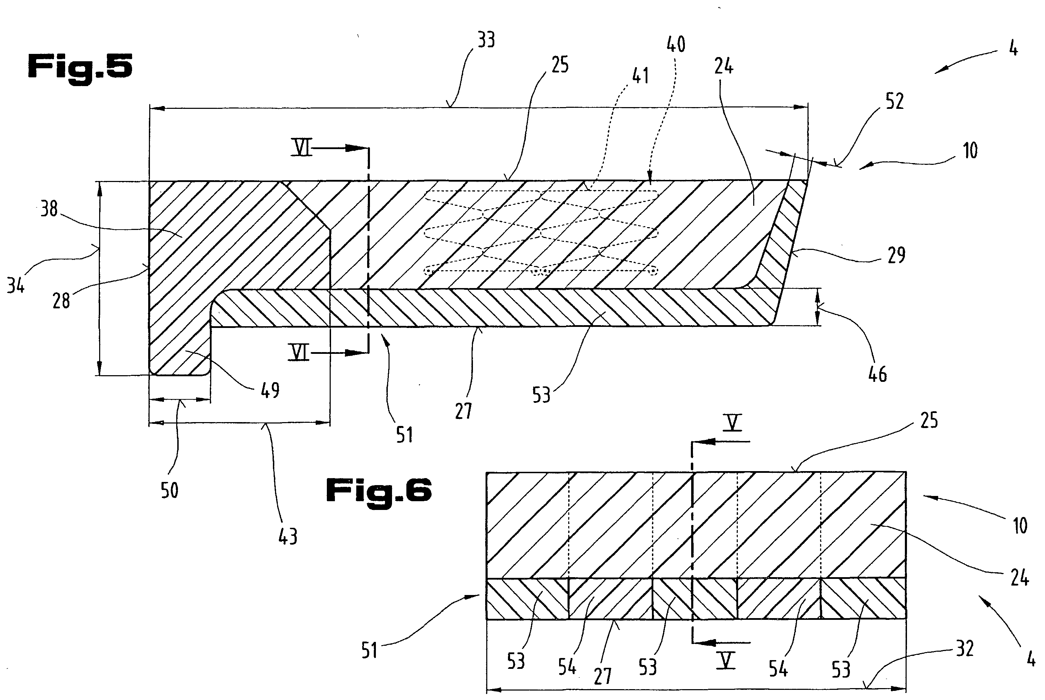

In den Fig. 5 und 6 ist eine weitere mögliche Ausführungsform des Tragelementes 10 für den Sitzpolster 4 vereinfacht dargestellt, wobei wiederum für gleiche Teile gleiche Bezugszeichen wie in den Fig. 1 bis 4 verwendet werden, wobei jede beliebige Kombination mit in anderen Figuren beschriebenen Ausbildungen der Schutzschicht 12 bzw. dem Aufsatzelement 9 möglich sind.

Das hier dargestellte Tragelement 10 besteht wiederum aus dem aus Polyurethanschaum gebildeten Tragteil 24, in welchem gegebenenfalls die Stützvorrichtung 40 eingebettet ist, sowie dem vorderen Einsatzteil 38 aus Polyethylenschaum. Der Einsatzteil 38 weist im Bereich der vorderen Seitenfläche 28 einen über die Unterseite 27 des Tragelementes 10 vorragenden Ansatz 49 auf, welcher eine Stärke 50 aufweist, welche geringer der Länge 43 in Richtung der hinteren Seitenfläche 29 ist.

Weiters weist das Tragelement 10 ausgehend vom Ansatz 49 des Einsatzteils 38 in Richtung der hinteren Seitenfläche 29 im Bereich der Unterseite 27 zusätzlich zum Tragteil 24 eine eigene Absorptionsschicht 51 auf, welche sich gegebenenfalls über die Seitenfläche 29 in Richtung der Oberseite 25 bedarfsweise bis hin zu dieser erstreckt. Diese Absorptionsschicht 51 ist aus zueinander unterschiedlichen Materialien ausgebildet, wie dies durch die Schraffur in der Fig. 6 dargestellt ist. Im Bereich der Unterseite 27 weist diese Absorptionsschicht 51 in Richtung der Oberseite 25 die bevorzugt gleichmäßige Höhe 46 auf, welche größer ausgebildet ist als eine Dicke 52 derselben im Bereich der hinteren Seitenfläche 29.

Wie nun besser aus der Fig. 6 zu ersehen ist, erstreckt sich die Absorptionsschicht 51 über die gesamte Breite 32 des Tragelementes 10, wobei bei dieser Darstellung bezogen auf die Querschnittsabmessungen der einzelnen Bauteile der Absorptionsschicht 51 zueinander eine gleichmäßige Aufteilung gewählt wurde. Es sind aber selbstverständlich zueinander unterschiedliche Querschnittsabmessungen der einzelnen Bauteile möglich, welche z.B. aus parallel zueinander verlaufenden Vollprofilen gebildet sind.

So ist diese Absorptionsschicht 51 bei diesem Ausführungsbeispiel aus drei voneinander distanzierten Einsatzteilen 53 sowie zwei zwischen diesen angeordneten Dämpfungsteilen 54 gebildet, welche somit zueinander unmittelbar benachbart angeordnet sind. Die einzelnen Einsatzteile 53 bestehen wiederum aus dem zuvor detailliert beschriebenen Polyethylenschaum und die dazwischen angeordneten Dämpfungsteile 54 aus dem speziell ausgebildeten Memoryschaum. Die an der Unterseite 27 angeordneten Einsatzteile 53 aus Polyethylenschaum dienen zur Abstützung und ersten Stoßaufnahme bei einer auftretenden Stoßbelastung, wie beispielsweise einer härteren Notlandung, wobei bei dieser Belastung das Schaumgerüst des Polyethylenschaums zusammenbricht, und welcher bedingt durch die zuvor angegebenen Härtewerte eine hohe Energieaufnahme bewirkt. Die zusätzlich zwischen den Einsatzteilen 53 angeordneten Dämpfungsteile 54 aus dem Memoryschaum dienen dazu, ebenfalls auftretende Stoßenergie kurzfristig aufzunehmen, da dieser bei einer schlagartigen Belastung ein hartes Dämpfungsverhalten aufweist. Die Dämpfungsteile 54 weisen bei länger andauernder Belastung eine abnehmende Härte auf und sind so anschließend weich und verformbar anzusehen. Durch das Zusammenwirken der Einsatzteile 53 mit den Dämpfungsteilen 54 tritt bei der Belastung eine Wechselwirkung auf, welche sich dadurch äußert, daß nach bzw. während dem Brechen des PE-Schaumes der Memoryschaum die weitere Dämpfung übernimmt und so kurzfristig das Zerbrechen hemmt.Dies führt zu einem stufenweise Zerbrechen des PE-Schaumes.

Bevorzugt sind die einzelnen Einsatzteile 53 und/oder Dämpfungsteile 54 zumindest im Bereich von Abstützflächen und/oder Bereichen vom Traggestell 2 angeordnet, welche zur Abstützung des Sitzpolsters 4 vorgesehen sind. Die Einsatzteile 53 dienen zur zusätzlichen Sitzkomfortverbesserung. Es ist aber auch möglich, die einzelnen Bauteile in Richtung senkrecht zur Unterseite 27 des Tragelementes 10 übereinander anzuordnen.

Selbstverständlich ist es aber auch möglich, anstatt der hier gezeigten streifenweise Anordnung der Einsatzteile 53 sowie der Dämpfungsteile 54 beispielsweise die Absorptionsschicht 51 aus einer durchgehenden Schicht, z.B. aus Polyethylenschaum, zu bilden und in dieser Schicht einzelne, bevorzugt durchgehende Ausnehmungen vorzusehen, in welche wiederum Dämpfungsteile 54, z.B. aus Memoryschaum, eingesetzt werden. Dabei ist die Form sowie der Querschnitt der Dämpfungsteile 54 frei wählbar.

Die Anordnung der Schutzschicht 12 ist der Übersichtlichkeit halber hier nicht näher dargestellt und beschrieben, wobei auf die detaillierte Beschreibung in den Fig. 1, 3, 9 und 10 hingewiesen wird. Gleiches gilt für die detaillierte Beschreibung der unterschiedlichen Werkstoffe für die hier verwendeten Kunststoffschäume, welche in der Fig. 2 detailliert beschrieben worden sind.

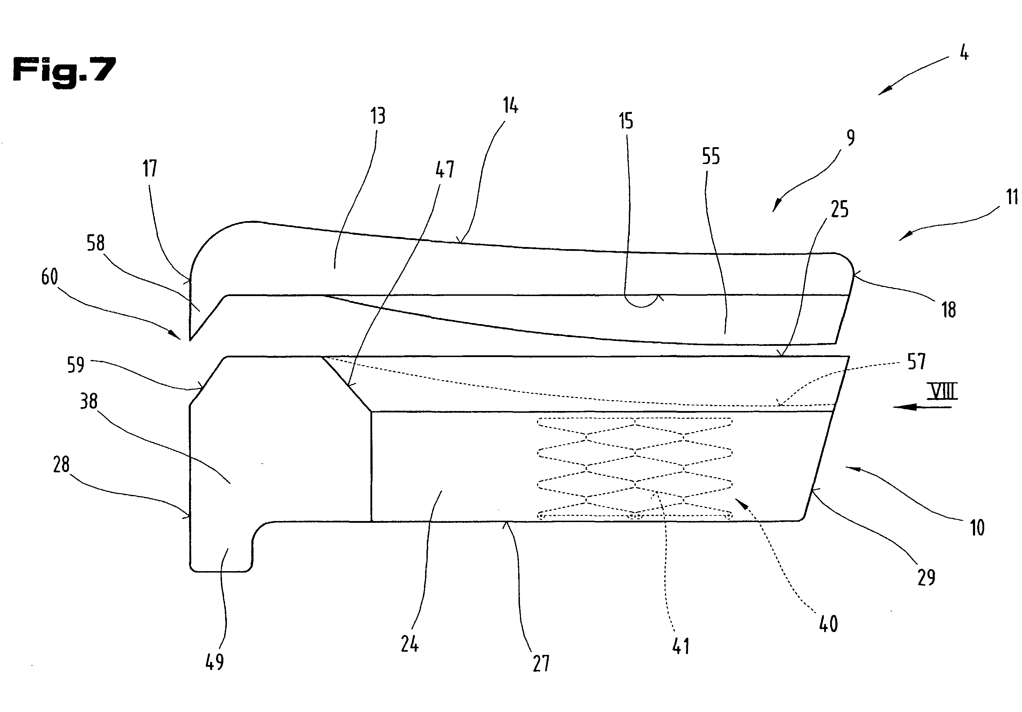

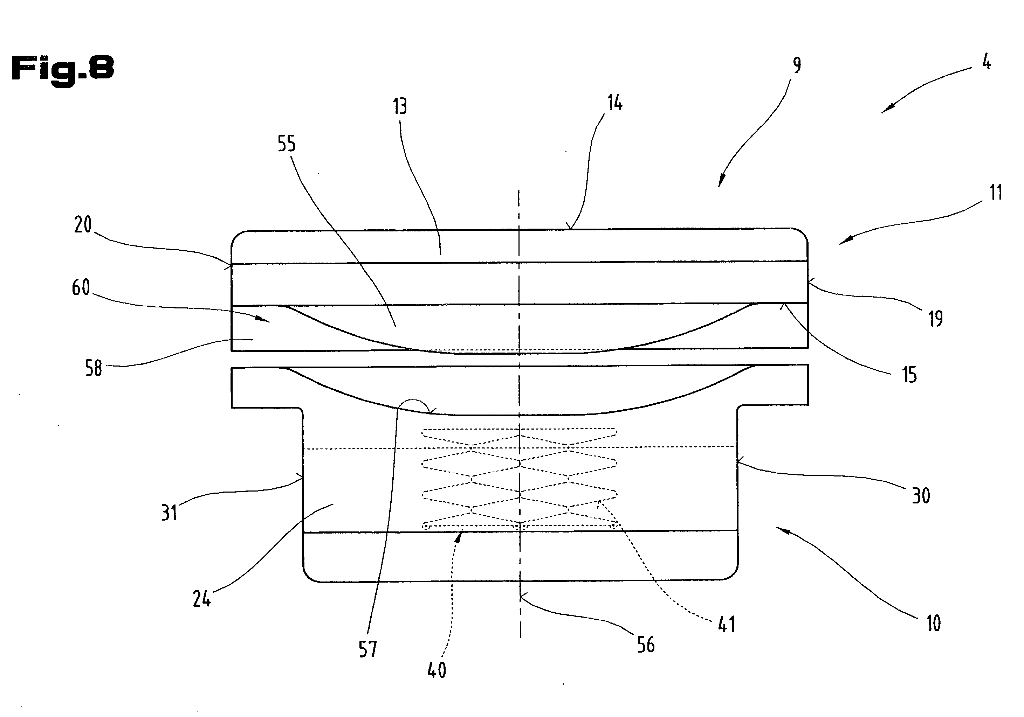

In den Fig. 7 und 8 ist eine weitere mögliche Ausführungsform eines Stützkörpers 11 für den Sitzpolster 4 gezeigt, welcher aus dem Aufsatzelement 9 sowie dem Tragelement 10 gebildet ist, wobei wiederum für gleiche Teile gleiche Bezugszeichen wie in den Fig. 1 bis 6 verwendet werden.

Um eine zusätzliche Sitzkomfortverbesserung beim Auflageteil 13, insbesondere, wenn dieser im Bereich seiner Oberseite 14 hin zur Unterseite 15 eine relativ geringe Dicke aufweist, zu erzielen, weist dieser eine über die Unterseite 15 im Mittelbereich desselben vorragende Verdickung 55 auf, welche im bevorzugten Sitzbereich des Sitzpolsters 4 angeordnet ist. Diese Verdickung 55 ist bevorzugt stetig zunehmend ausgehend von den seitlichen Seitenflächen 19, 20 hin zu einem Mittelbereich 56 ausgebildet.

Um eine entsprechende Abstützung am Tragelement 10 zu erzielen, weist dieses, insbesondere der Tragteil 24 eine gegengleich zur Verdickung 55 ausgebildete Aufnahme 57 auf, welche im Zusammenwirken mit der Verdickung 55 eine Zentrierung bzw. Ausrichtung des Auflageteils 13 in bezug zum Tragelement 10 sowie dem Mittelbereich 56 bewirkt. Dadurch wird ein relativ exaktes Übereinandersetzen nach einem durchgeführten Wechsel des Auflageteils 13 in bezug zum Tragelement auf einfache Art und Weise ermöglicht, wodurch ein derartiger Tausch bei einem beispielsweise verschmutzten Auflageteil nicht unbedingt durch ein Fachpersonal durchgeführt werden muß.

Weiters ist beim Auflageteil 13 im Bereich der vorderen Seitenfläche 17 ein die Unterseite 15 überragender Ansatz 58 gezeigt, welcher in seiner Stärke mit zunehmendem Abstand von der Unterseite 15 stetig verjüngend ausgebildet ist. Dies führt einerseits im Zusammenwirken mit einer gegengleich ausgebildeten Anlagefläche 59 am Einsatzteil 38 zu einer längenmäßigen Ausrichtung des Aufsatzelementes 9 in bezug zum Tragelement 10 sowie andererseits zu einer Sitzkomfortverbesserung im Kniebereich eines Benutzers eines derartig ausgebildeten Stützkörpers 11.

Im Tragteil 24 kann wiederum die Stützvorrichtung 40 angeordnet bzw. in diese eingebettet sein, um ein Zusammensinken des Schaumgerüstes bei einer länger andauernden Benutzung des Tragelementes 10 zu verhindern. Selbstverständlich ist es aber auch möglich, das hier gezeigte Aufsatzelement 9, insbesondere den Auflageteil 13, mit einem in den vorangegangenen Figuren beschriebenen Tragelement 10 zu kombinieren. Ebenfalls ist die Anordnung der Schutzschicht 12 frei wählbar, wobei hier auf die detaillierte Beschreibung in der Fig. 3 sowie 9, 10 hingewiesen wird.

Bedingt durch die Anordnung der Verdickung 55 sowie des Ansatzes 58 am Aufsatzelement 9 einerseits und andererseits durch die Aufnahme 57 sowie der Anlagefläche 59 am Tragelement 10 bildet sich zwischen diesen bedarfsweise voneinander lösbaren Bauteilen bzw. Elementen eine Zentrieranordnung 60 aus, welche das Aufeinanderfügen der beiden Bauteile, nämlich des Aufsatzelementes 9 und des Tragelementes 10 sowohl bei der Erstzusammenfügung als auch bei einem später durchgeführten Wechsel des Aufsatzelementes 9 erleichtert.

Selbstverständlich ist es auch möglich, die Zentrieranordnung 60 zwischen dem Aufsatzelement 9 und dem Tragelement 10 in jeder beliebigen anderen Raumform auszubilden. So wäre es beispielsweise möglich, die Zentrieranordnung 60 im Bereich der jeweils einander zugewandten Seitenflächen 17 bis 20 bzw. 28 bis 31 durch gegengleich ausgebildete Vorsprünge bzw. Aufnahmen auszubilden. Dabei sei erwähnt, daß die hier dargestellte Zentrieranordnung 60 nur beispielhaft für eine Vielzahl von möglichen Ausführungsformen gewählt wurde. Selbstverständlich kann aber diese Zentrieranordnung 60 auch bei all den hier beschriebenen Ausführungsformen für den Sitzpolster 4 Verwendung finden.

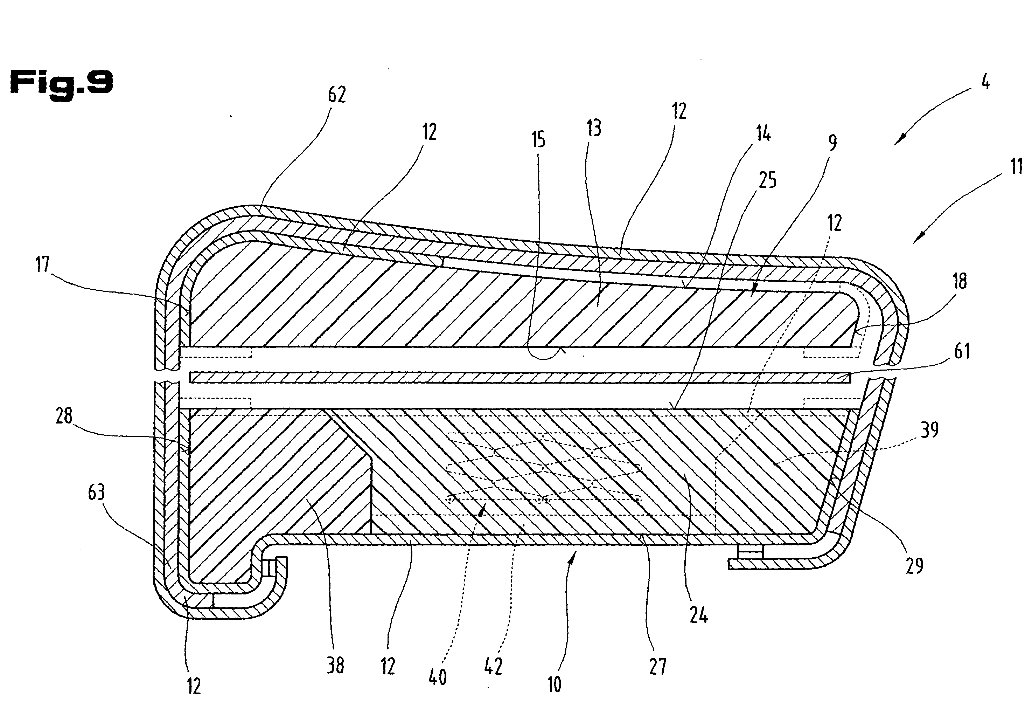

In der Fig. 9 ist eine weitere mögliche Ausrührungsform des Sitzpolsters 4, welcher aus dem Stützkörper 11 gebildet ist, gezeigt, wobei wiederum für gleiche Teile gleiche Bezugszeichen wie in den Fig. 1 bis 8 verwendet werden. Um für einzelne Bauteile unnötige Wiederholungen zu vermeiden, wird auf die detaillierte Beschreibung in den vorangegangenen Figuren verwiesen.

Um die Übersichtlichkeit in der Darstellung zu verbessern, wurde der Sitzpolster 4, welcher aus den unterschiedlichsten Bauteilen zusammengesetzt ist, schematisch vereinfacht sowie in einer Art Explosionsdarstellung gezeigt. Der Stützkörper 11 umfaßt das Aufsatzelement 9 sowie das Tragelement 10, wobei das Tragelement 10 wiederum gemäß einer bereits zuvor beschriebenen Ausführungsform entsprechend ausgebildet werden kann. Bei diesem Ausführungsbeispiel umfaßt das Tragelement 10 den Tragteil 24, in welchem bedarfsweise die Stützvorrichtung 40 angeordnet bzw. eingebettet ist, sowie den vorderen Einsatzteil 38. Selbstverständlich ist es aber auch möglich, wie dies in strichlierten Linien angedeutet ist, den hinteren Einsatzteil 39 und/oder den weiteren Einsatzteil 42 im Bereich der Unterseite 27 zusätzlich anzuordnen. Selbstverständlich ist aber auch eine Ausbildung des Tragelementes 10 gemäß der Beschreibung in den Fig. 5 und 6 möglich. Bedarfsweise kann selbstverständlich auch die zuvor beschriebene Zentrieranordnung 60 zwischen dem Aufsatzelement 9 und dem Tragelement 10 angeordnet sein.

Bei dem hier gezeigten Ausführungsbeispiel ist das Tragelement 10 im Bereich seiner Unterseite 27 sowie den vorderen und hinteren bzw. seitlichen Seitenflächen 28 bis 31 sowie bedarfsweise die Oberseite 25 bereichsweise übergreifend von der Schutzschicht 12 abgedeckt. Zusätzlich kann bedarfsweise auch die Oberseite 25 des Tragelementes 10 mit einer weiteren Schutzschicht 12 abgedeckt sein, wobei hier noch zusätzlich dargestellt ist, daß die Schutzschicht 12 im Bereich der Oberseite 25 beispielsweise während des Aufschäumvorganges des Kunststoffschaumes an diesen angeformt und/oder eingebettet ist.

Das Aufsatzelement 9 ist bei diesem Ausführungsbeispiel bereichsweise von der Schutzschicht 12 abgedeckt, wobei diese im Bereich der vorderen Seitenfläche 17 sowie bereichsweise die Oberseite 14 übergreifend angeordnet und mit dem Auflageteil 13 verbunden ist. Zusätzlich kann, wie dies in strichlierten Linien angedeutet ist, sich die Schutzschicht 12 auch bis in den Bereich der hinteren Seitenfläche 18, bedarfsweise diese übergreifend, bis hin zur Unterseite 15 erstrecken. Ein Überlappen bzw. Abdecken der beiden seitlichen Seitenflächen 19, 20 kann, aber muß nicht erfolgen. Gleiches gilt für ein Übergreifen bzw. Überlappen der Schutzschicht 12 ausgehend von Seitenflächen 17 bis 20 in Richtung der Unterseite 15.

Die Schutzschicht 12 im Bereich der vorderen Seitenfläche 17 und einem Teilbereich der Oberseite 14 dient beim Aufsatzelement als zusätzlicher Scheuerschutz für die Schaumstruktur des Auflageteils 13.

Zwischen dem Aufsatzelement 9 und dem Tragelement 10, welche noch in einer distanzierten Position voneinander dargestellt sind, ist ein Verbindungselement 61 schematisch vereinfacht dargestellt, welches beispielsweise durch eine Kleberschicht, eine wärmeaktivierbare Klebefolie aus Kunststoff, ein Schmelzklebepulver oder dgl. gebildet sein kann. Dieses Verbindungselement 61 ermöglicht während des Einsatzes des Sitzpolsters 4 einen stabilen Zusammenhalt der einzelnen Elemente bzw. Bauteile des Stützkörpers 11, wobei das Verbindungselement 61 jedoch derart ausgebildet ist, daß das Aufsatzelement 9 auf einfache Art und Weise vom Tragelement 10 bzw. deren Oberseite 25 für einen gewünschten Wechsel abhebbar bzw. ablösbar ist. Das Ablösen bzw. ein Einreißen der Schaumstruktur kann durch die bedarfsweise, bereichsweise Anordnung der Schutzschichten im Randbereich der Seitenflächen 17 bis 20 bzw. 28 bis 31 im Bereich der Unterseite 15 bzw. Oberseite 25 erleichtert bzw. verhindert werden. Der Ablösevorgang bzw. das Einreißen kann noch durch die zusätzliche Anordnung der Schutzschicht 12 im Bereich der Oberseite 25 des Tragelementes 10 begünstigt werden.

Soll nun ein Auflageteil 13 vom Tragelement 10 abgelöst werden, so ist ein Lösen bzw. ein Zerstören des Verbindungselementes 61 notwendig. Bei einer Verwendung einer Kleberschicht für das Verbindungselement 61 ist die Oberseite 25 des Tragelementes 10 von verbliebenen Schaumresten des Aufsatzelementes 9 sowie verbliebenen Resten des Verbindungselementes 61 zu säubern, ein neues Verbindungselement 61 aufzubringen und anschließend wiederum ein neues Aufsatzelement 9 am Tragelement 10 zu befestigen. Dabei kann das Aufbringen des Verbindungselementes 61 beispielsweise nur in den Randbereichen der Unterseite 15 bzw. Oberseite 25, welche den Seitenflächen 17 bis 20 bzw. 28 bis 31 zugeordnet sind, erfolgen.Selbstverständlich kann das Verbindungselement 61 auch bereichsweise über die miteinander zu verbindenden Oberflächen aufgebracht werden. Als Verbindungselement 61 können aber auch beispielsweise Klettverschlüsse oder dgl. Verwendung finden.

Der gesamte Stützkörper 11, bestehend aus dem Tragelement 10 und dem Aufsatzelement 9, ist zusätzlich von einer weiteren Schutzschicht 12 in Form eines bevorzugt flammhemmend ausgebildeten Bezugsstoffes 62 zumindest bereichsweise abgedeckt. Bei diesem hier gezeigten Ausführungsbeispiel erstreckt sich die als Bezugsstoff 62 ausgebildete Schutzschicht 12 ausgehend von der Oberseite 14 des Aufsatzelementes 9 über die vordere und hintere Seitenfläche 17 bzw. 18 des Aufsatzelementes 9 und/oder die vorderen und hinteren Seitenflächen 28 und 29 des Tragelementes 10 sowie bedarfsweise übergreifend die Unterseite 27 den Tragelementes 10. Auch ist ein Abdecken bzw. Einhüllen der seitlichen Seitenflächen 19, 20 sowie gegebenenfalls 30, 31 durch den Bezugsstoff 62 möglich. Im Bereich der Unterseite 27 des Tragelementes 10 ist zwischen der als Bezugsstoff 62 ausgebildeten Schutzschicht 12 und der am Tragelement 10 angeordneten Schutzschicht 12 eine bedarfsweise lösbare Verbindungsvorrichtung schematisch angedeutet.

Weiters kann zwischen der als Bezugsstoff 62 ausgebildeten äußeren Schutzschicht 12 und den bedarfsweise am Stützkörper 11 angeordneten Schutzschichten 12 eine weitere zusätzliche Schutzschicht 12 in Form einer Zwischenschicht 63 angeordnet sein, welche einund/oder mehrlagig ausgebildet sein kann. So ist es beispielsweise möglich, diese Schutzschicht 12 durch einen mit einem flüssigen und/oder pulverförmigen Flammschutzmittel 35, 36 getränkten und/oder versetzten bzw. imprägnierten Kunststoffschaum zu bilden. Weiters hat es sich als vorteilhaft erwiesen, wenn die die Zwischenschicht 63 bildende Schutzschicht 12 hochtemperaturfest und/oder schwer bzw. nicht brennbar ausgebildet ist und aus hochfesten bzw. schnittfesten Fäden bzw. Fasern gebildet ist. Dabei können die Fasern bzw. Fäden für die Schutzschicht 12 aus Kunststoff, Polyester, Kevlar, Teflon, Aramid oder anderen hochtemperaturfesten Kunststoffen, Metall, Kohle, Keramik, Glas, Graphit, Phenolharz oder dgl. bzw. einer beliebigen Kombination daraus gebildet sein. Weiters haben sich modifizierte Naturfasern, wie beispielsweise Baumwolle, welche mit Flammschutzmitteln getränkt bzw. versetzt sind, als vorteilhaft erwiesen. Weiters kann die Schutzschicht 12 auch in Art eines Gewirkes, Netzes, Gitters oder dgl. aus den zuvor genannten unterschiedlichen Werkstoffen gebildet sein. Weiters kann eine der Schutzschichten durch ein Vlies gebildet sein, welches aus genadelten und/oder thermisch gebundenen Fasern bzw. Fäden gebildet ist, welches vorzugsweise noch auf einer eigenen Trägerlage aufgenadelt ist. Die einzelnen Fasern bzw. Fäden des Vlieses können aus Kunststoff und/oder Naturmaterialien gebildet sein, wobei sich als Kunststoff für die Fasern und/oder Fäden bzw. den Filamenten der Schutzschicht 12 Polyethylen und/oder Polyacrylat und/oder Polybenzimidazol und/oder Aramid und/oder Polypropylen und/oder Polyamid und/oder Polyacrylnitril verwendet wird. Weiters kann als Material für den Bezugsstoff 62 auch Leder, Filz, Baumwolle, Leinen, Polyester, Nylon usw. verwendet werden. Weiters ist es aber auch möglich, die Schutzschicht 12 im Bereich der Unterseite 27 z.B. in Form eines Preß-, Form- bzw. Standteiles aus den unterschiedlichsten, eine gewisse Eigensteifigkeit aufweisenden Materialien, wie z.B. Metall, Kunststoff usw., zu bilden und einen der Sitzpolsterteile z.B. mittels eines Anformvorganges daran anzuformen.

Um eine Versteifung der Schutzschicht 12 im Bereich des Kunststoffschaumes zu vermeiden, kann diese auf der dem Kunststoffschaum zugewandten Seite mit einer Flüssigkeitsimprägnierung versehen sein. Dadurch tritt beispielsweise bei einem Anschäumvorgang bedingt durch die Einbettung der Schutzschicht 12 in den Kunststoffschaum keine zusätzliche Versteifung auf, wodurch die Schutzschicht 12 flexibel bleibt.

Um eine Verbindung zwischen dem Kunststoffschaum des Stützkörpers 11, insbesondere des Aufsatzelementes 9 und/oder des Tragelementes 10 zu erzielen, wird die Schutzschicht 12 zumindest bereichsweise mit dem Kunststoffschaum verbunden, insbesondere verklebt, wobei dabei bevorzugt zwischen 30 % und 80 % der gesamten Berührungsfläche der Schutzschicht 12 mit dem Kunststoffschaum verbunden ist. Weiters ist auch beispielsweise eine bereichsweise Anformung des Kunststoffschaums des Aufsatzelementes 9 und/oder des Tragelementes 10 an die Schutzschicht 12 möglich, wobei auch noch eine Einbettung der Schutzschicht 12 in den Kunststoffschaum vorgesehen werden kann. Um eine gute Abriebfestigkeit der Schutzschicht 12, insbesondere des Bezugsstoffes 62, zu erzielen, muß dieser in seiner Abriebfestigkeit zumindest den Mindestanforderungen des Squirmin Hermin-Tests, gemäß BSS 7302, entsprechen. Dadurch ist gewährleistet, daß bei einer oftmaligen Benutzung des Sitzpolsters 4 einerseits der Bezugsstoff und andererseits die darunter angeordneten, zumindest einlagigen Schutzschichten keine zu starke Abnützung während des Betriebes und Einsatzes aufweisen, um so eine längere Benutzungsdauer des Sitzpolsters zu erzielen. Ebenfalls wird dadurch auch in stark beanspruchten Zonen der Abrieb des Kunststoffschaums des Stützkörpers 11 vermindert bzw. vermieden.

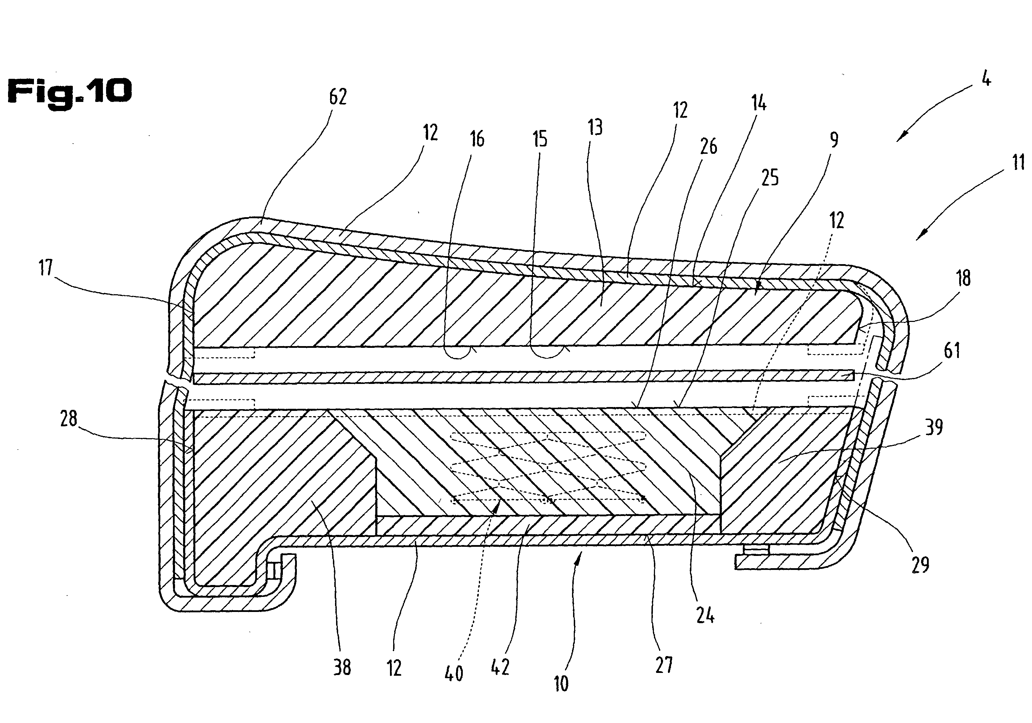

In der Fig. 10 ist eine andere weitere mögliche Ausführungsform des Sitzpolsters 4, welcher aus dem Stützkörper 11 gebildet ist, gezeigt, wobei wiederum für gleich Teile gleich Bezugszeichen, wie in den Fig. 1 bis 9 verwendet werden. Um für die beim Sitzpolster 4 verwendeten einzelnen Bauteile bzw. der Schutzschicht 12 unnötige Wiederholungen zu vermeiden, wird auf die detaillierte Beschreibung in den vorangegangenen Figuren verwiesen.

Um wiederum die Übersichtlichkeit sowie die Möglichkeiten der Darstellung zu verbessern, wurde der Sitzpolster 4, welcher aus den unterschiedlichsten Bauteilen zusammengesetzt ist, schematisch vereinfacht sowie in einer Art Explosionsdarstellung gezeigt. Der Stützkörper 11 umfaßt das Aufsatzelement 9 sowie das Tragelement 10, wobei bei diesem Ausführungsbeispiel eine weitere Anordnungsmöglichkeit der Schutzschichten am Stützkörper 11 gezeigt ist. Das Aufsatzelement 9 kann beispielsweise wiederum durch den Auflageteil 13 und das Tragelement 10 durch den Tragteil 24 sowie durch die im Bereich der vorderen und hinteren Seitenflächen 28, 29 angeordneten Einsatzteile 38, 39 sowie dem im Bereich der Unterseite 27 sich zwischen den beiden Einsatzteilen 38, 39 erstreckenden weiteren Einsatzteil 42 gebildet sein. Im Tragteil 24 kann bedarfsweise die Stützvorrichtung 40 angeordnet bzw. eingesetzt oder eingeschäumt sein.

Zwischen den einander zugewandten Auflageflächen 16, 26, welche durch die Unterseite 15 des Auflageteils 13 und die Oberseite 25 des Tragelementes 10 gebildet sind, ist das zuvor beschriebene Verbindungselement 61 zur bedarfsweise, lösbaren Halterung der beiden Elemente gegeneinander zwischen diesen dargestellt. Dieses Verbindungselement 61 kann beispielsweise durch eine Kleberschicht, eine wärmeaktivierbare Kleberfolie aus Kunststoff, ein Schmelzklebepulver, eine Klettbandverbindung oder dgl. gebildet sein und ermöglicht während des Einsatzes des Sitzpolsters 4 einen stabilen Zusammenhalt der einzelnen Elemente bzw. Bauteile des Stützkörpers 11 im Bereich der einander zugewandten Auflageflächen 16, 26.

Bei diesem Ausführungsbeispiel ist nun an der Unterseite 27 des Tragelementes 10 eine der zuvor beschriebenen Schutzschichten 12 angeordnet, welche bedarfsweise zumindest eine der beiden Seitenflächen 28, 29 in Richtung der Oberseite 25 bis hin zu dieser übergreift. Zusätzlich ist es aber auch möglich, daß diese Schutzschicht 12 auch die beiden seitlichen Seitenflächen 30, 31 ebenfalls in Richtung der Oberseite 25 übergreift. Diese am Tragelement 10 angeordnete Schutzschicht 12 ist bevorzugt als Feuerblocker ausgebildet, wobei es zusätzlich noch vorteilhaft ist, wenn diese Schutzschicht eine hohe Abriebfestigkeit aufweist.

Eine weitere Schutzschicht 12 ist im Bereich der Oberseite 14 des Aufsatzelementes 9 sowie die vordere und hintere Seitenfläche 17, 18 übergreifend angeordnet, welche bedarfsweise auch die beiden vorderen und hinteren Seitenflächen 28, 29 des Tragelementes 10 in Richtung der Unterseite 27 übergreift. Somit kann es zu einer Überlappung der oberen Schutzschicht 12 des Aufsatzelementes 9 mit der unteren Schutzschicht 12 des Tragelementes 10 im Bereich der vorderen und hinteren Seitenflächen 28, 29 kommen. Im Überlappungsbereich zwischen diesen beiden Schutzschichten kann beispielsweise eine Verbindungsschicht angeordnet sein, welche ein gegenseitiges Anhaften bewirkt. Dadurch ist das durch den Auflageteil 13 gebildete Aufsatzelement 9 in seiner Lage am Tragelement 10 fixiert gehaltert. Zusätzlich dazu kann sich die obere Schutzschicht 12 des Aufsatzelementes 9 auch über die beiden seitlichen Seitenflächen 19, 20 sowie gegebenenfalls über die beiden Seitenflächen 30, 31 des Tragelementes 10 in Richtung der Unterseite 27 erstrecken.

Unabhängig davon ist es aber auch möglich, beispielsweise die obere Schutzschicht 12 des Aufsatzelementes 9 im Bereich der vorderen bzw. hinteren Seitenfläche 17, 18 in etwa bündig mit der Unterseite 15 abschließen zu lassen bzw. gegebenenfalls diese, wie dies mit strichlierten Linien angedeutet ist, in einem den Seitenflächen 17 bis 20 zugewandten Randbereich der Unterseite 15 anzuordnen.

Unabhängig davon ist es auch möglich, die im Bereich der Unterseite 27 angeordnete Schutzschicht 12 des Tragelementes 10 bereichsweise die Oberseite 25 des Tragelementes 10 übergreifend anzuordnen, wie dies ebenfalls mit strichlierten Linien angedeutet ist. Als weitere Variante ist es aber auch möglich, wie dies in strichpunktierten Linien im Bereich der beiden hinteren Seitenflächen 18, 29 angedeutet ist, daß sich die untere Schutzschicht 12 des Tragelementes 10 über die Oberseite 25 in Richtung der hinteren Seitenfläche 18 des Aufsatzelementes 9 erstreckt.

Dieser grundsätzliche Aufbau des Sitzpolsters 4 wird in seiner Gesamtheit von einer weiteren Schutzschicht 12, welche beispielsweise durch den Bezugsstoff 62 gebildet ist, ausgehend von der Oberseite 14 des Aufsatzelementes 9 sich weiter erstreckend über die Seitenflächen 17 bis 20 bzw. 28 bis 31 bis hin in einen Randbereich der Unterseite 27 eingehüllt bzw. von dieser umschlossen. Eine Verbindung der äußersten Schutzschicht 12 mit dem Stützkörper 11 kann beispielsweise in deren der Unterseite 27 zugewandten Endbereich mittels schematisch, vereinfacht dargestellter Klettverschlüsse erfolgen. Es ist aber selbstverständlich jede andere lösbare Verbindungsvorrichtung zwischen der als Bezugsstoff 62 ausgebildeten Schutzschicht 12 und der an der Unterseite 27 des Tragelementes 10 angeordneten weiteren Schutzschicht 12 möglich. Unabhängig davon ist es zu der zuvor beschriebenen bis auf die Unterseite 27 allseitigen Umhüllung des Stützkörpers 11 durch den Bezugsstoff 62 aber auch möglich, diesen beispielsweise nur bereichsweise im Bereich der Seitenflächen 17 bis 20 bzw. 28 bis 31 anzuordnen und ist je nach Ausführungsform bzw. Verwendungszweck des Sitzpolsters 4 frei wählbar.

Bevorzugt wird die direkt am Auflageteil 13 angeordnete Schutzschicht 12 durch ein Gitter, Netz oder eine Matte aus hochtemperaturfesten Fäden, wie beispielsweise Glas, gebildet, wodurch sich einerseits bedingt durch den Zusatz der Flammschutzmittel 35, 36 zum Auflageteil 13 in Kombination mit der Glasmatte einerseits eine günstige Brandhemmung für den Kunststoffschaum ausbildet und andererseits eine abriebfeste Zwischenschicht zwischen dem Bezugsstoff 62 und der Schaumstruktur erzielt. Als zusätzliche Ausführungsvariante ist es auch möglich, wie dies bereits zuvor beschrieben wurde, eine weitere Schutzschicht zwischen den einander zugewandten Auflageflächen 16, 26, beispielsweise im Bereich der Oberseite 25 des Tragelementes 10 anzuordnen, um wiederum eine definierte Ablöseebene für das bedarfsweise abhebbare Aufsatzelement 9 zu bilden.

Weiters kann es sich aber auch noch als vorteilhaft erweisen, einzelne der zuvor beschriebenen Schutzschichten 12 im Bereich des Auflageteils 13 sowie gegebenenfalls zwischen dem Auflageteil 13 und dem Tragteil 24 aus Kostengründen wegzulassen und lediglich die Schutzschicht 12 im Bereich der Unterseite 27 des Tragelementes 10 anzuordnen und den Bezugsstoff 62 als Schutzschicht 12 ausgehend von der Oberseite 14 und sich zumindest bereichsweise über die Seitenflächen 17 bis 20 bzw. 28 bis 31 hin zur Unterseite 27 des Tragelementes 10 erstreckend anzuordnen. Aufgrund dieser Ausbildung in Verbindung mit dem flammhemmend ausgebildeten Kunststoffschaum kann eine erhebliche Kostenreduktion bei gleichzeitiger Gewichtseinsparung für den Gesamtaufbau des Sitzpolsters 4 erzielt werden.

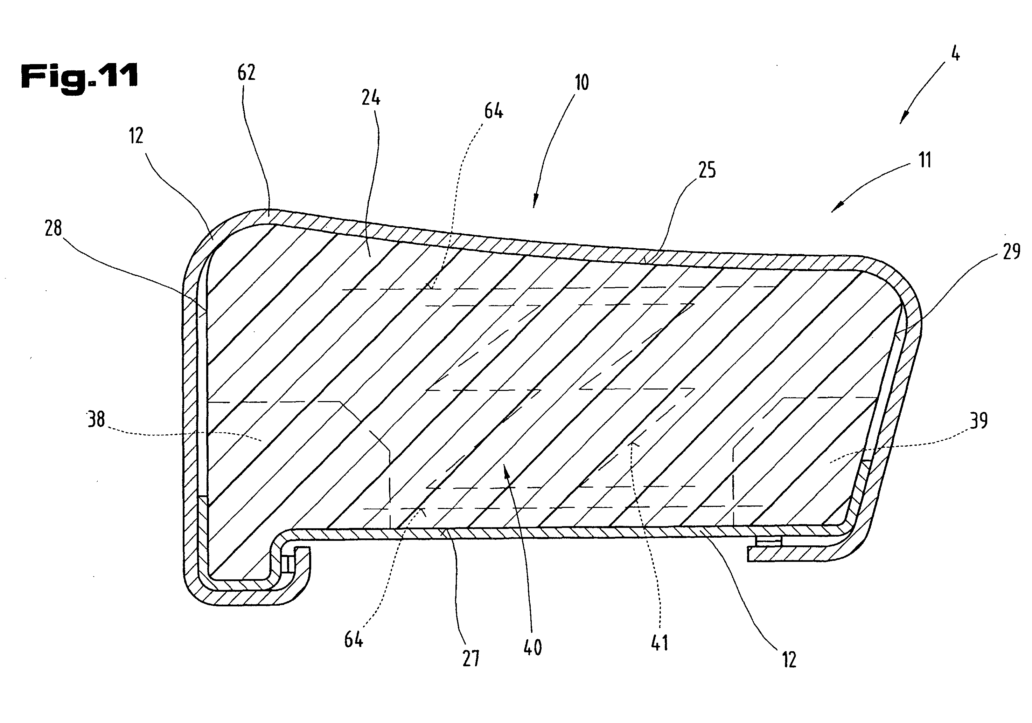

In der Fig. 11 ist eine weitere mögliche Ausführungsform des Sitzpolsters 4, welcher aus dem Stützkörper 11 gebildet ist, gezeigt, wobei wiederum für gleiche Teile gleiche Bezugszeichen wie in den Fig. 1 bis 10 verwendet werden. Um für die beim Sitzpolster 4 verwendeten einzelnen Bauteile bzw. der Schutzschicht unnötige Wiederholungen zu vermeiden, wird auf die detaillierte Beschreibung in den vorangegangenen Figuren verwiesen bzw. bezug genommen.

Der Stützkörper 11 umfaßt bei diesem Ausführungsbeispiel nur das durch den Tragteil 24 gebildete Tragelement 10 und stellt somit einen Sitzpolsterteil des Sitzpolsters 4 dar, welches aus einem bereits zuvor beschriebenen Kunststoffschaum, insbesondere einem Polyurethanschaum mit bevorzugt pulverförmigen Flammschutzmitteln 35, 36, gebildet ist. Der Tragteil 24 bildet somit den gesamten Stützkörper 11 für den Sitzpolster 4 aus und dieser weist die Seitenflächen 28 bis 31 sowie die Oberseite 25, im vorliegenden Fall die Sitzfläche, und die Unterseite 27 auf. Dadurch ist der Stützkörper 11 in seiner Raumform sowie seinen Abmessungen festgelegt. Zusätzlich ist noch gezeigt, daß am Tragteil 24 im Bereich seiner Unterseite 27 sowie zumindest bevorzugt bereichsweise die einzelnen Seitenflächen 28 bis 31 übergreifend die Schutzschicht 12 angeordnet ist. Die Anordnung, Aufbringung sowie Ausbildung der Schutzschicht 12 im Bereich der Unterseite 27 kann gemäß den zuvor beschriebenen Ausführungsformen auf unterschiedlichste Art und Weise erfolgen.

Der Kunststoffschaum des Tragteils 24 kann selbstverständlich aber auch mit den unterschiedlichsten bereits zuvor beschriebenen Flammschutzmitteln 35, 36 versetzt bzw. getränkt bzw. imprägniert sein, wobei beispielsweise auch das Flammschutzmittel 35, 36 zumindest bereichsweise lediglich im Bereich der äußeren Flächen, also im Bereich der Seitenflächen 28 bis 31 sowie der Oberseite 25 bzw. Unterseite 27 aufgebracht, wie z.B. aufgesprüht, beschichtet usw., ist.

Zusätzlich ist es aber auch noch möglich, im Tragteil 24 des Tragelementes 10 die bereits zuvor beschriebene Stützvorrichtung 40 z.B. in Form eines Federkerns 41 anzuordnen bzw. im Kunststoff einzubetten, wobei die Anordnung der Stützvorrichtung 40 bevorzugt in jenem Bereich erfolgt, welcher während der Benützung der höchsten Druckbelastung ausgesetzt ist, um somit eine Sitzkomfortverbesserung zu erzielen. Diese Stützvorrichtung 40 kann selbstverständlich auch aus den unterschiedlichsten Kunststoffschäumen bzw. Einlageteilen gebildet sein.

Weiters ist noch zusätzlich in strichlierten Linien im Bereich der Stützvorrichtung 40 gezeigt, daß zur besseren Lastverteilung sowie zum Schutz des Kunststoffschaumes an der Stützvorrichtung 40 an der der Oberseite 25 und/oder der Unterseite 27 zugewandten Seite eine eigene Stützschicht 64 mit in den Kunststoffschaum eingebettet sein kann, welche die von der Stützvorrichtung 40 ausgehenden Federkräfte innerhalb desdie Stützvorrichtung 40 umgebenden Kunststoffschaumes besser verteilen bzw. weiterleiten kann. Diese Stützschicht 64 kann aus den unterschiedlichsten Werkstoffen sowie in unterschiedlichster Ausführungsform, wie z.B. einem Gitter, Netz, flächigem Gewebe oder ähnlichem, ausgebildet sein und dient lediglich zur besseren Kraftverteilung innerhalb des Tragteils 24 ausgehend von der Stützvorrichtung 40 hin zum Kunststoffschaum des Tragteils 24.

Darüberhinaus ist es aber auch noch möglich, beispielsweise im Bereich der vorderen Seitenfläche 28 und/oder im Bereich der hinteren Seitenfläche 29 einen der zuvor bereits beschriebenen Einsatzteile 38, 39 anzuordnen, welche wiederum einzelne Bauteile des Stützkörpers 11 bilden. Diese beiden Einsatzteile 38, 39 sind bevorzugt im Bereich der Unterseite 27 des Tragteils 24 angeordnet und erstrecken sich ausgehend von dieser zumindest bereichsweise in den Bereich der Oberseite 25. Unabhängig davon ist es aber auch möglich, den in der Fig. 4 zwischen den beiden Einsatzteilen 38, 39 beschriebenen Einsatzteil 42 auch bei dieser Ausführungsform des Stützkörpers 11 anzuordnen bzw. überhaupt einen im Bereich der Unterseite 27 ausgehend von der vorderen Seitenfläche 28 hin zur hinteren Seitenfläche 29 durchgehend ausgebildeten Einsatzteil einzusetzen.

Dieser hier beschriebene Stützkörper 11, welcher gegebenenfalls auch aus mehreren Bauteilen zusammengesetzt sein kann und an welchem im Bereich der Unterseite 27 die Schutzschicht 12 angeordnet ist, kann mit einer weiteren Schutzschicht 12, z.B. in Form des Bezugsstoffes 62, ausgehend von der Oberseite 25 und bedarfsweise zumindest einzelne der Seitenflächen 28 bis 31 sowie gegebenenfalls die Unterseite 27 bereichsweise übergreifend angeordnet bzw. abgedeckt sein. Auf die detaillierte Beschreibung der den Bezugsstoff 62 bildenden Schutzschicht 12 wird hier verzichtet und auf die detaillierte Beschreibung in den Fig. 1 bis 10 hingewiesen bzw. Bezug genommen.

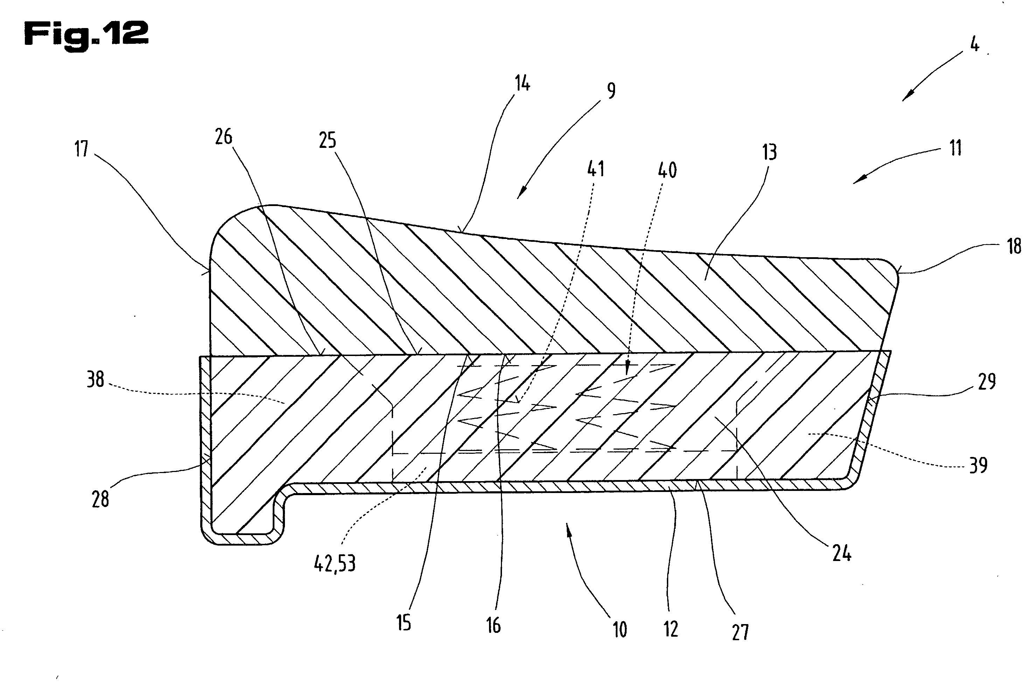

In der Fig. 12 ist eine weitere mögliche Ausbildung des Stützkörpers 11 zur Bildung des Sitzpolsters 4 gezeigt, wobei wiederum für gleiche Teile gleiche Bezugszeichen wie in den Fig. 1 bis 11 verwendet werden. Um unnötige Wiederholungen zu vermeiden, wird auf die detaillierte Beschreibung einzelner Bauteile verzichtet und auf die zuvor in den Fig. 1 bis 11 erfolgte Beschreibung hingewiesen bzw. Bezug genommen.

Bei diesem hier gezeigten Ausführungsbeispiel umfaßt der Stützkörper 11 den das Aufsatzelement 9 bildenden Auflageteil 13 sowie den das Tragelement 10 bildenden Tragteil 24. Das Aufsatzelement 9 weist die dem Tragteil 24 zugewandte Unterseite 15, welche die Auflagefläche 16 darstellt, auf, welche der die Oberseite 25 bildende Auflagefläche 26 des Tragelementes 10 zugewandt ist. Diese beiden Auflageflächen 16, 26 zwischen dem Aufsatzelement 9 und dem Tragelement 10 können eine Verbindungs- bzw. Trennebene zwischen diesen beiden Elementen ausbilden, wobei die Verbindung sowie Halterung zwischen diesen beiden Elementen auf die unterschiedlichste bereits zuvor beschriebene Art und Weise erfolgen kann. Auch ist zwischen diesen beiden Elementen eine bedarfsweise lösbare Verbindungsvorrichtung sowie gegebenenfalls die Zentrieranordnung 60 möglich.

Sowohl der Auflageteil 13 als auch der Tragteil 24 bestehen wiederum aus einem der zuvor beschriebenen Kunststoffschäume, insbesondere aus einem Polyurethanschaum, welcher mit einem der bereits zuvor beschriebenen Flammschutzmittel 35, 36 versetzt, imprägniert bzw. getränkt sein kann. Bevorzugt wird hierbei Graphit, insbesondere Blähgraphit, bzw. Kohlenstoff in den unterschiedlichsten Korngrößen verwendet, um eine entsprechende Flammhemmung des Kunststoffschaumes zu erzielen. Dabei kann die Beimengung eines Flammschutzmittels bereits vor dem Verschäumen zu einer der Kunststoffrohkomponenten erfolgen. Vorteilhaft kann es aber weiters noch sein, wenn der Auflageteil 13 und der Tragteil 24 eine zueinander unterschiedliche Dichte und/oder Härte und/oder Stauchhärte aufweisen.

Weiters ist beim Tragteil 24 gezeigt, daß dieser im Bereich seiner Unterseite 27 sowie bedarfsweise übergreifend die Seitenflächen 28 bis 31 von der Schutzschicht 12 abgedeckt ist. Diese Schutzschicht kann auch als Tragteil des Sitzgestells ausgebildet sein und eine gewisse Eigenstabilität aufweisen.

Weiters kann im Bereich der höchsten Belastung, also im Sitzbereich des Stützkörpers 11 im Tragteil 24 eine der zuvor bereits detailliert beschreibenen Stützvorrichtungen 40, wie z.B. ein Federkern 41 oder dgl., im Kunststoffschaum angeordnet bzw. in diesem eingebettet sein. Bei der Einbettung der Stützvorrichtung 40 kann diese beispielsweise vom Kunststoffschaum des Tragteils 24 vollständig umschlossen sein.

Zusätzlich ist es auch noch möglich, wie dies bereits in den vorangegangenen Figuren auch beschrieben worden ist, im Bereich der vorderen Seitenfläche 28 und/oder im Bereich der hinteren Seitenfläche 29 wiederum einen der Einsatzteile 38, 39 anzuordnen, wie dies in strichlierten Linien vereinfacht dargestellt worden ist. Diese Einsatzteile 38, 39 dienen zur Aufnahme bzw. Absorption von auftretenden Druckbelastungen ausgehend vom Sitzgestell hin zum Benutzer eines derartigen Sitzes, um diesen bei einem eventuellen Flugzeugabsturz bzw. bei einer Bruchlandung vor einer übermäßigen Belastung bzw. vor durch den Sitzaufbau hindurchdringenden Gestellteilen sicher zu schützen. Diese Einsatzteile 38, 39 können sich aber selbstverständlich auch ausgehend von der vorderen Seitenfläche 28 hin zur hinteren Seitenfläche 29 durchgehend erstrecken, wobei die Anordnung der Einsatzteile 38, 39 von der Ausbildung des jeweiligen Sitzes 1 bzw. Traggestells 2 abhängig ist. Weiters ist es unabhängig davon aber auch möglich, den Einsatzteil 38, 39 bzw. den auch zwischen diesen sich erstreckenden weiteren Einsatzteil 42 bzw. 53 in unterschiedlichsten Schaumstoffqualitäten bzw. Festigkeitswerten einzusetzen und beispielsweise aus PE-Schaum, Memoryschaum, Polyimidschaum, Silikonschaum, Silikonelastomerschaum oder dgl. zu bilden.

Die hier nicht dargestellte, den Bezugsstoff 62 bildende Schutzschicht 12 kann wiederum die Oberseite 14 des Auflageteils 13, welche die Sitzfläche ausbildet, sowie zumindest bereichsweise dessen Seitenflächen 17 bis 20 sowie gegebenenfalls die weiteren Seitenflächen 28 bis 31 des Tragteils 24 abdecken. Eine lösbare Verbindungsvorrichtung zwischen dem Bezugsstoff 62 und dem Stützkörper 11 kann auf bekannte Art und Weise z.B. in Form von Klettverschlüssen im Bereich der Unterseite 27 des Stützkörpers 11 erfolgen. Diese den Stützkörper 11 ausgehend von der Oberseite 14 umhüllende Schutzschicht 12 kann ein- und/oder auch mehrlagig aus den zuvor beschriebenen Werkstoffen gebildet sein.

Weiters sei erwähnt, daß sowohl der Tragteil 24 als auch der Auflageteil 13 aus zueinander gleichen bzw. auch ungleichen Werkstoffen gebildet sein können, wobei die Werte für die Dichte bzw. das Raumgewicht, die Härte sowie die Stauchhärte gemäß jenen Angaben gewählt werden können, wie dies bereits zuvor detailliert beschrieben worden ist. Selbstverständlich ist aber auch die Zumischung bzw. Beifügung sowie Beimengung, Imprägnierung sowie Tränkung mit den unterschiedlichsten Flammschutzmitteln 35, 36 möglich, wobei wiederum bevorzugt bei Verwendung von PUR-Schaum Graphit bzw. Kohlepartikel in den unterschiedlichsten Korngrößen zur Flammhemmung eingesetzt werden können.

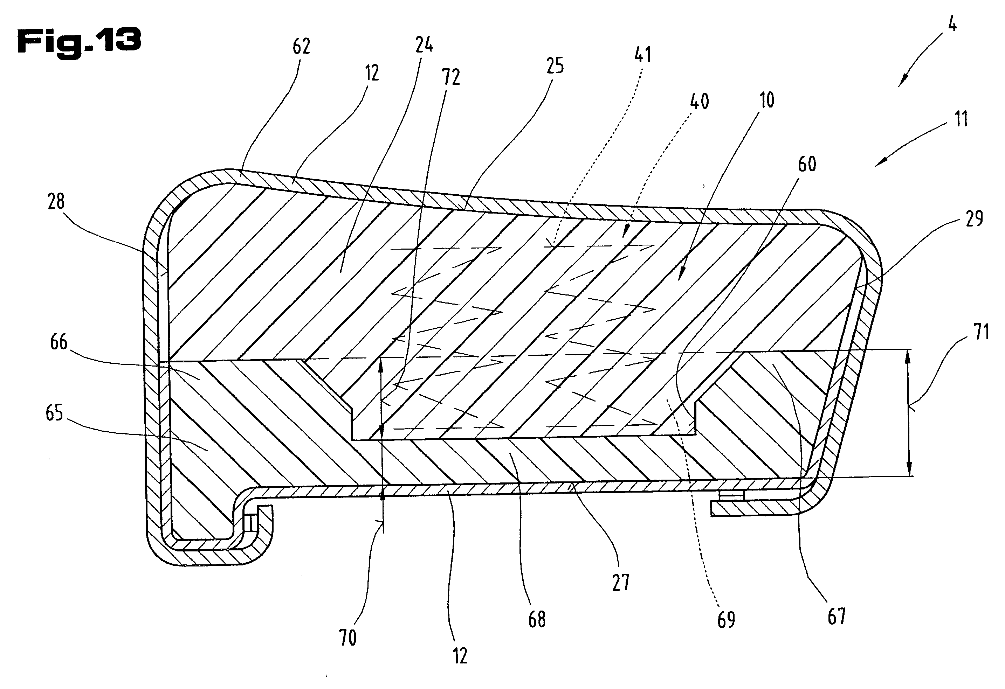

In der Fig. 13 ist eine weitere mögliche Ausführungsform des Sitzpolsters 4, welcher aus dem Stützkörper 11 gebildet ist, gezeigt, wobei wiederum für gleiche Teile gleiche Bezugszeichen wie in den Fig. 1 bis 12 verwendet werden. Um für die beim Sitzpolster 4 verwendeten einzelnen Bauteile bzw. der Schutzschicht 12 unnötige Wiederholungen zu vermeiden, wird auf die detaillierte Beschreibung in den vorangegangenen Figuren verwiesen.

Der Stützkörper 11 ist wiederum aus mehreren Bauteilen zusammengesetzt und umfaßt das Tragelement 10 sowie einen eigenen Einsatzteil 65, welcher sich bei diesem Ausrührungsbeispiel ausgehend von der vorderen Seitenfläche 28 hin zur hinteren Seiten-fläche 29 durchlaufend erstreckt und über diesen Längsverlauf gesehen in vertikaler Richtung zur Unterseite 27 hin zur Oberseite 25 eine unterschiedliche Höhenerstreckung aufweist. Dieser Einsatzteil 65 bildet einen Bauteil des Tragelementes 10 und ist bevorzugt aus einem Polyethylenschaum bzw. aus einem Memoryschaum gebildet, wobei jedoch auch eine Kombination der beiden zuvor genannten Werkstoffe untereinander zur Ausbildung des Einsatzteils 65 möglich ist. Selbstverständlich sind aber auch andere aus dem Stand der Technik bekannte Kunststoffschäume einsetzbar.

Bei diesem Ausführungsbeispiel ist der Einsatzteil 65 im Querschnitt gesehen in etwa U- bzw. C-förmig ausgebildet, wobei eine vordere sowie hintere Erhöhung 66, 67 über einen zwischen diesen angeordneten Verbindungssteg 68 miteinander verbunden sind. Dieser in etwa U- bzw. C-förmig ausgebildete Einsatzteil 65 kann selbstverständlich aber auch wannenförmig ausgebildet sein, wobei zwischen den Erhöhungen 66, 67 diese im Bereich der Seitenflächen 29, 30 verbindende weitere Erhöhungen 69 angeordnet sein können, wie dies in strichlierten Linien angedeutet ist. Der Verbindungssteg 68 weist ausgehend von der Unterseite 27 in Richtung der Oberseite 25 eine Stärke 70 auf, welche geringer einer Höhe 71 der Erhöhungen 66, 67 bzw. 69 ist. Aufgrund dieser Maßdifferenz zwischen der Stärke 70 des Verbindungssteges 68 und der Höhe 71 der Erhöhungen 66, 67 sowie 69 bildet sich in vertikaler Richtung zur Unterseite 27 eine Tiefe 72 als Aufnahme für den Tragteil 24 aus. Aufgrund dieser Erhöhungen 66, 67 bzw. 69 ist es möglich, das Tragelement 10 mit einer zum Einsatzteil 65 gegengleichen Form auszubilden, wodurch eine Zentrierung des Tragteils 24 in bezug zum Einsatzteil 65 durch die Zentrieranordnung 60 erfolgt.

Aufgrund der im Bereich der vorderen Seitenfläche 28 angeordneten Erhöhung 66, welche sich bevorzugt vollständig über die gesamte Breite 21 des Stützkörpers 11 erstreckt, bildet sich bei einer extremen Sitzbelastung eine Art Wall gegenüber dem Herausrutschen eines Benutzers eines derartigen Sitzes aus.

Weiters ist es durch die Ausbildung des Tragelementes 10 bei diesem Ausführungsbeispiel nicht mehr notwendig, ein eigenes Aufsatzelement 9 in Form des Auflageteils 13 vorzusehen, wobei es wiederum möglich ist, im Tragteil 24 die Stützvorrichtung 40 anzuordnen bzw. einzubetten. Diese Stützvorrichtung 40 kann beispielsweise wiederum durch den Federkern 41 sowie andere z.B. aus Kunststoffschaum gebildete Einlageteile gebildet sein. Vorteilhaft ist es, wenn die Stützvorrichtung 40, insbesondere der Federkern 41, vollständig im Tragteil 24 eingebettet bzw. vom Kunststoff desselben umschlossen ist, da so eine gewisse Federwirkung der Stützvorrichtung 40 hin zum Schaumgerüst des Tragteils 24 übertragen werden kann. Zusätzlich ist es aber auch noch möglich, wie dies bereits in der Fig. 11 beschreiben worden ist, in jenen Bereichen der Stützvorrichtung 40, welche der Unterseite 27 bzw. der Oberseite 25 zugewandt sind, zumindest eine der zuvor beschriebenen Stützschichten 64 anzuordnen, um eine bessere Kraftverteilung innerhalb des Schaumgerüstes zu erzielen.

Weiters ist hier gezeigt, daß der Stützkörper 11 im Bereich seiner Unterseite 27 von der Schutzschicht 12 sowie bedarfsweise die Seitenflächen 28 bis 31 übergreifend angeordnet ist. Zur Abdeckung der Oberseite 25 sowie gegebenenfalls jener Flächenbereiche, welche von der im Bereich der Unterseite 27 angeordneten Schutzschicht 12 nicht abgedeckt sind, ist es vorteilhaft, die weitere Schutzschicht 12 in Form des Bezugsstoffes 62 anzuordnen und diese wiederum mittels bedarfsweise lösbarer Befestigungsvorrichtungen im Bereich der Unterseite 27 zu haltern.

Die Verbindung bzw. Halterung zwischen dem Tragteil 24 und dem Einsatzteil 65 sowie zwischen der Schutzschicht 12 im Bereich der Unterseite 27 und dem Einsatzteil 65 kann auf die unterschiedlichste Art und Weise erfolgen und beispielsweise nur bereichsweise sowie gegebenenfalls auch vollflächig erfolgen. Auch ist ein Anschäumen des Tragteils 24 am Einsatzteil 65 möglich, wodurch eine Produktionsvereinfachung bei einer möglichen Kostensenkung der Herstellkosten erzielbar ist.

Der Ordnung halber sei abschließend darauf hingewiesen, daß zum besseren Verständnis des Aufbaus des Sitzpolsters diese bzw. dessen Bestandteile teilweise unmaßstäblich verzerrt sowie maßstäblich vergrößert dargestellt wurden, um das Verständnis der erfindungsgemäßen Lösung zu verbessern.

### Bezugszeichenaufstellung

- 1: Sitz
- 2: Traggestell
- 3: Polsterung
- 4: Sitzpolster
- 5: Rückenpolster

- 6: Kopfpolster
- 7: Seitenwand
- 8: Armlehne
- 9: Aufsatzelement
- 10: Tragelement

- 11: Stützkörper
- 12: Schutzschicht
- 13: Auflageteil
- 14: Oberseite
- 15: Unterseite

- 16: Auflagefläche
- 17: Seitenfläche
- 18: Seitenfläche
- 19: Seitenfläche
- 20: Seitenfläche

- 21: Breite
- 22: Länge
- 23: Höhe
- 24: Tragteil
- 25: Oberseite

- 26: Auflagefläche
- 27: Unterseite
- 28: Seitenfläche
- 29: Seitenfläche
- 30: Seitenfläche

- 31: Seitenfläche
- 32: Breite
- 33: Länge
- 34: Höhe
- 35: Flammschutzmittel

- 36: Flammschutzmittel
- 37: Verbindungselement
- 38: Einsatzteil
- 39: Einsatzteil
- 40: Stützvorrichtung

- 41: Federkern
- 42: Einsatzteil
- 43: Länge
- 44: Länge
- 45: Länge

- 46: Höhe
- 47: Abstützfläche
- 48: Abstützfläche
- 49: Ansatz
- 50: Stärke

- 51: Absorptionschicht
- 52: Dicke
- 53: Einsatzteil
- 54: Dämpfungsteil
- 55: Verdickung

- 56: Mittelbereich
- 57: Aufnahme
- 58: Ansatz
- 59: Anlagefläche
- 60: Zentrieranordnung

- 61: Verbindungselement
- 62: Bezugsstoff
- 63: Zwischenschicht
- 64: Stützschicht
- 65: Einsatzteil

- 66: Erhöhung
- 67: Erhöhung
- 68: Verbindungssteg
- 69: Erhöhung
- 70: Stärke

- 71: Höhe
- 72: Tiefe

## Patentansprüche

1. Tragelement (10) für einen Sitzpolster (4), insbesondere für einen Fahrzeugoder Flugzeugsitz, mit zumindest einem Bauteil aus einem Kunststoffschaum, wobei das Tragelement (10) eine Oberseite (25), welche eine Auflagefläche (26) ausbildet, eine davon abgewendete Unterseite (27) sowie sich dazwischen erstreckende vordere bzw. hintere sowie seitliche Seitenflächen (28 bis 31) aufweist, **dadurch gekennzeichnet, daß** zumindest ein Bauteil des Tragelementes (10) durch einen PUR - Kunststoffschaum mit einer Dichte zwischen 15 kg/m³ und 90 kg/m³, bevorzugt zwischen 60 kg/m³ und 70 kg/m³, mit einer Härte zwischen 150 N und 550 N, bevorzugt 400 N, bei einer Stauchhärte zwischen 1 kPa bis 20 kPa, bevorzugt 5 kPa bis 10 kPa, bei 40 % Eindrucktiefe, gebildet ist.

2. Tragelement nach Anspruch 1, **dadurch gekennzeichnet, daß** die Härte zumindest eines Bauteils des Tragelementes (10), welcher zur Abstützung auf einem Traggestell (2) ausgebildet ist, zwischen 800 N und 4000 N und eine Stauchhärte zwischen 30 kPa und 100 kPa bei 40 % Eindrucktiefe beträgt.

3. Tragelement nach Anspruch 1 oder 2, **dadurch gekennzeichnet, daß** zumindest ein Bauteil des Tragelementes (10) aus einem Kunststoffschaum mit einer Dichte bzw. einem Raumgewicht zwischen 50 kg/m³ und 80 kg/m³, bevorzugt 60 kg/m³ und 70 kg/m³, gebildet ist und durch einen offenzelligen PUR-Schaum auf Esterbasis mit viscoelastischem Verhalten ausgebildet ist und eine Stauchhärte zwischen 6 kPa und 25 kPa aufweist.

4. Tragelement nach Anspruch 3, **dadurch gekennzeichnet, daß** die Stauchhärte des Kunststoffschaums zwischen 11 kPa und 25 kPa, bevorzugt 15 kPa und 20 kPa, bei 40 % Eindrucktiefe beträgt.

5. Tragelement nach einem der vorhergehenden Ansprüche, **dadurch gekennzeichnet, daß** zumindest einzelne Bauteile des Tragelementes (10) flammhemmend ausgebildet sind.

6. Tragelement nach einem der vorhergehenden Ansprüche, **dadurch gekennzeichnet, daß** dem Kunststoffschaum zumindest ein pulverförmiges Flammschutzmittel (35, 36) zugesetzt oder dieser damit imprägniert ist.

7. Tragelement nach Anspruch 6, **dadurch gekennzeichnet, daß** das Flammschutzmittel (35, 36) ein Hydrat oder ein Hydroxyd, wie ein Aluminiumhydroxyd oder ein Hydrat eines Zinksalzes, ist.

8. Tragelement nach Anspruch 6 oder 7, **dadurch gekennzeichnet, daß** das Flammschutzmittel (35, 36) bei Temperaturerhöhung Stickoxyde freisetzende Bestandteile aufweist und durch Melamin oder Amoniumpolyphosphat gebildet ist.

9. Tragelement nach einem der Ansprüche 6 bis 8, **dadurch gekennzeichnet, daß** das Flammschutzmittel (35, 36) bei Temperaturerhöhung volumenvergrößernd ist und durch Kohlenstoff oder Graphit gebildet ist.

10. Tragelement nach einem der Ansprüche 6 bis 9, **dadurch gekennzeichnet, daß** die Menge des pulverförmigen Flammschutzmittels (35, 36) zwischen 15 Gewichtsteilen und 50 Gewichtsteilen, bevorzugt zwischen 20 Gewichtsteilen und 40 Gewichtsteilen, eines Bauteiles des Tragelementes (10) beträgt.

11. Tragelement nach einem der Ansprüche 6 bis 10, **dadurch gekennzeichnet, daß** das Flammschutzmittel (35, 36) bei Temperaturerhöhung Halogene freisetzende Bestandteile aufweist und durch organische Phosphorsäureverbindungen gebildet ist.

12. Tragelement nach Anspruch 11, **dadurch gekennzeichnet, daß** die Menge des Flammschutzmittels (35, 36), welches Halogene freisetzt, zwischen 1 Gewichtsteil und 20 Gewichtsteilen, bevorzugt zwischen 5 Gewichtsteilen und 12 Gewichtsteilen, eines Bauteiles des Tragelementes (10) beträgt.

13. Tragelement nach einem der vorhergehenden Ansprüche, **dadurch gekennzeichnet, daß** sich die Bauteile mit einer Stauchhärte zwischen 30 kPa und 100 kPa und 6 kPa bis 25 kPa von der Unterseite (27) in Richtung der Auflagefläche (26) bzw. der Sitzfläche erstrecken und einander unmittelbar benachbart angeordnet sind.

14. Tragelement nach Anspruch 13, **dadurch gekennzeichnet, daß** die Bauteile senkrecht zur Unterseite (27) eine gleiche Höhe (46) aufweisen und bevorzugt aus parallel zueinander verlaufenden und nebeneinander angeordneten Vollprofilen bestehen.

15. Tragelement nach Anspruch 13 oder 14, **dadurch gekennzeichnet, daß** die Bauteile im Abstützbereich des Tragelementes (10) am Traggestell (2) angeordnet sind.

16. Tragelement nach einem der vorhergehenden Ansprüche, **dadurch gekennzeichnet, daß** die einzelnen Bauteile in Richtung senkrecht zur Unterseite (27) des Tragelementes (10) übereinander angeordnet sind.

17. Tragelement nach einem der vorhergehenden Ansprüche, **dadurch gekennzeichnet, daß** in dem Bauteil mit einer Dichte zwischen 15 kg/m³ und 90 kg/m³ und einer Härte zwischen 150 N und 550 N eine Stützvorrichtung (40) eingesetzt bzw. eingebettet ist.

18. Tragelement nach Anspruch 17, **dadurch gekennzeichnet, daß** die Stützvorrichtung (40) durch einen Federkern (41), insbesondere aus einem nichtrostenden Stahl, oder durch einen Kunststoffschaum mit höherer Härte gebildet ist.

19. Tragelement nach einem der vorhergehenden Ansprüche, **dadurch gekennzeichnet, daß** das Tragelement (10) bzw. das dieses bildende Bauteil zumindest bereichsweise von einer zumindest einlagigen Schutzschicht (12) abgedeckt ist.

20. Tragelement nach Anspruch 19, **dadurch gekennzeichnet, daß** die Schutzschicht (12) im Bereich der Unterseite (27) des Tragelementes (10) angeordnet ist.

21. Tragelement nach Anspruch 19 oder 20, **dadurch gekennzeichnet, daß** die Schutzschicht (12) im Bereich zumindest einer der Seitenflächen (28 bis 31) des Tragelementes (10) angeordnet ist.

22. Tragelement nach einem der Ansprüche 19 bis 21, **dadurch gekennzeichnet, daß** die Schutzschicht (12) ausgehend von zumindest einer der Seitenflächen (28 bis 31) des Tragelementes (10) zumindest bereichsweise die Oberseite (25) des Tragelementes (10) übergreifend angeordnet ist.

23. Tragelement nach einem der Ansprüche 19 bis 22, **dadurch gekennzeichnet, daß** die Schutzschicht (12) im Bereich der Oberseite (25) des Tragelementes (10) angeordnet ist.

24. Tragelement nach einem der Ansprüche 19 bis 23, **dadurch gekennzeichnet, daß** die beiden Schutzschichten (12) im Bereich zwischen den Seitenflächen (28 bis 31) und der Oberseite (25) des Tragelementes (10) einander überlappend angeordnet sind.

25. Tragelement nach einem der Ansprüche 19 bis 24, **dadurch gekennzeichnet, daß** die beiden Schutzschichten (12) im Bereich zwischen den Seitenflächen (28 bis 31) und der Unterseite (27) des Tragelementes (10) einander überlappend angeordnet sind.

26. Tragelement nach einem der Ansprüche 19 bis 25, **dadurch gekennzeichnet, daß** die Schutzschicht (12) die Unterseite (27), die Seitenflächen (28 bis 31) sowie gegebenenfalls bereichsweise die Oberseite (25) des Tragelementes (9; 10) abdeckt.

27. Tragelement nach einem der Ansprüche 19 bis 23, **dadurch gekennzeichnet, daß** die Schutzschicht (12) einteilig ausgebildet ist.

28. Aufsatzelement (9) für einen Sitzpolster (4), insbesondere für einen Fahrzeugoder Flugzeugsitz, mit zumindest einem Bauteil aus einem Kunststoffschaum, wobei das Aufsatzelement (9) eine Oberseite (14), welche eine Sitzfläche ausbildet, eine davon abgewendete Unterseite (15), welche eine Auflagefläche (16) ausbildet, sowie sich dazwischen erstrekkende vordere bzw. hintere sowie seitliche Seitenflächen (17 bis 20) aufweist, **dadurch gekennzeichnet, daß** zumindest ein Bauteil des Aufsatzelementes (9) aus einem Kunststoffschaum mit einer Dichte bzw. einem Raumgewicht zwischen 30 kg/m³ und 100 kg/m³, bevorzugt 40 kg/m³ bis 70 kg/m³, gebildet ist und eine Härte zwischen 120 N und 450 N, bevorzugt 180 N bis 220 N, mit einer Stauchhärte von 1 kPa bis 15 kPa bei einer Eindrucktiefe von 40 % aufweist.

29. Aufsatzelement nach Anspruch 28, **dadurch gekennzeichnet, daß** der Kunststoffschaum zumindest eines Bauteils durch einen Polyurethanschaum mit bevorzugt offenzelliger Schaumstruktur, und/oder einen Polyimidschaum und/oder einen Polyetherschaum und/oder einen Silikon- oder einen Silikonelastomerschaum gebildet ist.

30. Aufsatzelement nach Anspruch 28 oder 29, **dadurch gekennzeichnet, daß** ein Auflageteil (13) des Aufsatzelementes (9) durch einen Teil eines Schaumblockes gebildet ist.

31. Aufsatzelement nach einem der Ansprüche 28 bis 30, **dadurch gekennzeichnet, daß** zumindest einzelne Bauteile des Aufsatzelementes (9) flammhemmend ausgebildet sind.

32. Aufsatzelement nach einem der Ansprüche 28 bis 31, **dadurch gekennzeichnet, daß** dem Kunststoffschaum zumindest ein pulverförmiges Flammschutzmittel (35, 36) zugesetzt oder dieser damit imprägniert ist.

33. Aufsatzelement nach Anspruch 32, **dadurch gekennzeichnet, daß** das Flammschutzmittel (35, 36) ein Hydrat oder ein Hydroxyd, wie ein Aluminiumhydroxyd oder ein Hydrat eines Zinksalzes, ist.

34. Aufsatzelement nach Anspruch 32 oder 33, **dadurch gekennzeichnet, daß** das Flammschutzmittel (35, 36) bei Temperaturerhöhung Stickoxyde freisetzende Bestandteile aufweist und durch Melamin oder Amoniumpolyphosphat gebildet ist.

35. Aufsatzelement nach einem der Ansprüche 32 bis 34, **dadurch gekennzeichnet, daß** das Flammschutzmittel (35, 36) bei Temperaturerhöhung volumenvergrößernd ist und durch Kohlenstoff oder Graphit gebildet ist.

36. Aufsatzelement nach einem der Ansprüche 32 bis 35, **dadurch gekennzeichnet, daß** die Menge des pulverförmigen Flammschutzmittels (35, 36) zwischen 15 Gewichtsteilen und 50 Gewichtsteilen, bevorzugt zwischen 20 Gewichtsteilen und 40 Gewichtsteilen, eines Bauteiles des Aufsatzelementes (9) beträgt.

37. Aufsatzelement nach einem der Ansprüche 32 bis 36, **dadurch gekennzeichnet, daß** das Flammschutzmittel (35, 36) bei Temperaturerhöhung Halogene freisetzende Bestandteile aufweist und durch organische Phosphorsäureverbindungen gebildet ist.

38. Aufsatzelement nach Anspruch 37, **dadurch gekennzeichnet, daß** die Menge des Flammschutzmittels (35, 36), welches Halogene freisetzt, zwischen 1 Gewichtsteil und 20 Gewichtsteilen, bevorzugt zwischen 5 Gewichtsteilen und 12 Gewichtsteilen, eines Bauteiles des Aufsatzelementes (9) beträgt.

39. Aufsatzelement nach einem der Ansprüche 28 bis 38, **dadurch gekennzeichnet, daß** dieses bzw. das dieses bildende Bauteil zumindest bereichsweise von einer zumindest einlagigen Schutzschicht (12) abgedeckt ist.

40. Aufsatzelement nach Anspruch 39, **dadurch gekennzeichnet, daß** die Schutzschicht (12) im Bereich zumindest einer der Seitenflächen (17 bis 20) angeordnet ist.

41. Aufsatzelement nach Anspruch 39 oder 40, **dadurch gekennzeichnet, daß** die Schutzschicht (12) ausgehend von zumindest einer der Seitenflächen (17 bis 20) zumindest bereichsweise die Oberseite (14) übergreifend angeordnet ist.

42. Aufsatzelement nach einem der Ansprüche 39 bis 41, **dadurch gekennzeichnet, daß** die Schutzschicht (12) ausgehend von zumindest einer der Seitenflächen (17 bis 20) zumindest bereichsweise die Unterseite (15) bzw. Auflagefläche (16) des Auflageteils (13) übergreifend angeordnet ist.

43. Aufsatzelement nach einem der Ansprüche 39 bis 42, **dadurch gekennzeichnet, daß** die Schutzschicht (12) im Bereich der Oberseite (14) angeordnet ist.

44. Aufsatzelement nach einem der Ansprüche 39 bis 43, **dadurch gekennzeichnet, daß** die Schutzschicht (12) im Bereich der Unterseite (15) bzw. Auflagefläche (16) angeordnet ist.

45. Aufsatzelement nach einem der Ansprüche 39 bis 44, **dadurch gekennzeichnet, daß** die Schutzschicht (12) die Oberseite (14) und zumindest die vordere und hintere Seitenfläche (17, 18) des Auflageteils (13) abdeckt und die Unterseite (15) in die von der Oberseite (14) entgegengesetzte Richtung übergreift.

46. Aufsatzelement nach einem der Ansprüche 39 bis 45, **dadurch gekennzeichnet, daß** die Schutzschichten (12), welche im Bereich zwischen den Seitenflächen (17 bis 20) und der Oberseite (14) angeordnet sind, einander gegenseitig überlappen.

47. Aufsatzelement nach einem der Ansprüche 39 bis 46, **dadurch gekennzeichnet, daß** die Schutzschichten (12), welche im Bereich zwischen den Seitenflächen (17 bis 20) und der Unterseite (15) angeordnet sind, einander gegenseitig überlappen.

48. Aufsatzelement nach einem der Ansprüche 39 bis 45, **dadurch gekennzeichnet, daß** die Schutzschicht (12) einteilig ausgebildet ist.

49. Aufsatzelement nach einem der Ansprüche 28 bis 48, **dadurch gekennzeichnet, daß** zwischen der Unterseite (15) des Aufsatzelementes (9) und der dieser zuwendbaren Oberseite (25) des Tragelementes (10) eine Zentrieranordnung (60) zur Positionierung der beiden Elemente zueinander angeordnet ist.

50. Aufsatzelement nach einem der Ansprüche 28 bis 49, **dadurch gekennzeichnet, daß** zwischen dem Aufsatzelement (9) und dem Tragelement (10) im Bereich zumindest von zwei einander zugewandten Seitenflächen (17 bis 20 bzw. 28 bis 31) ein Verbindungselement (37) zur gegenseitigen Verbindung angeordnet ist.

51. Sitzpolster für einen Fahrzeugsitz oder Flugzeugsitz, bestehend aus einem Aufsatzelement (9) und einem Tragelement (10), die einen Stützkörper (11) ausbilden und an ihren einander zugewandten Auflageflächen (16, 26) miteinander bedarfsweise lösbar verbunden sind, nach einem der Ansprüche 1 bis 50.

52. Sitzpolster nach Anspruch 51, **dadurch gekennzeichnet, daß** die zumindest einlagige Schutzschicht (12) als Bezugsstoff (62) ausgebildet ist und die Oberseite (14) und zumindest eine der Seitenflächen (17 bis 20) des Aufsatzelementes (9) sowie zumindest eine der Seitenflächen (28 bis 31) des Tragelementes (10) abdeckt.

53. Sitzpolster nach Anspruch 51 oder 52, **dadurch gekennzeichnet, daß** die Schutzschicht (12) bereichsweise die Unterseite (27) des Tragelementes (10) übergreift.

54. Sitzpolster nach einem der Ansprüche 51 bis 53, **dadurch gekennzeichnet, daß** die Schutzschicht (12) bedarfsweise lösbar mit dem Stützkörper (11) des Sitzpolsters (4) verbunden ist.

55. Sitzpolster nach einem der Ansprüche 51 bis 54, **dadurch gekennzeichnet, daß** der Stützkörper (11) zusätzlich von einer weiteren durch einen flammhemmend ausgebildeten Bezugsstoff (62) gebildeten Schutzschicht (12) zumindest bereichsweise abgedeckt ist.

56. Sitzpolster nach Anspruch 55, **dadurch gekennzeichnet, daß** der Bezugsstoff (62) die Oberseite (14) sowie die Seitenflächen (17 bis 20) des Aufsatzelementes (9) abdeckt.

57. Sitzpolster nach Anspruch 55 oder 56, **dadurch gekennzeichnet, daß** der Bezugsstoff (62) die Seitenflächen (28 bis 31) des Tragelementes (10) sowie die Unterseite (27) desselben übergreifend abdeckt.

58. Sitzpolster nach Anspruch 55 oder 57, **dadurch gekennzeichnet, daß** der Bezugsstoff (62) durch eine bedarfsweise lösbare Verbindungsvorrichtung am Tragelement (10) gehaltert ist.

## Claims

1. Support element (10) for a seat padding (4), in particular for a car or aircraft seat, having at least one component made from an expanded foam, the support element (10) having a top face (25) which forms a bearing surface (26), a bottom face (27) remote therefrom and front and rear as well as side faces (28 to 31) extending in between, **characterised in that** at least one component of the support element (10) is made from a PUR expanded foam with a density of between 15 kg/m³ and 90 kg/m³, preferably between 60 kg/m³ and 70 kg/m³, a hardness of between 150 N and 550 N, preferably 400 N, for a compressive hardness of between 1 kPa to 20 kPa, preferably 5 kPa to 10 kPa with a 40% indentation depth.

2. Support element as claimed in claim 1, **characterised in that** the hardness of at least one component of the support element (10) which is designed to be supported on a bearing frame (2) is between 800 N and 4000 N and has a compressive hardness of between 30 kPa and 100 kPa with a 40% indentation depth.

3. Support element as claimed in claim 1 or 2, **characterised in that** at least one component of the support element (10) is made from an expanded foam with a density or weight by volume of between 50 kg/m³ and 80 kg/m³, preferably 60 kg/m³ and 70 kg/m³, and is made from an open cell PUR foam with an ester base with viscoelastic behaviour and a compressive hardness of between 6 kPa and 25 kPa.

4. Support element as claimed in claim 3, **characterised in that** the compressive hardness of the expanded foam is between 11 kPa and 25 kPa, preferably 15 kPa and 20 kPa with a 40% indentation depth.

5. Support element as claimed in one of the preceding claims, **characterised in that** at least individual components of the support element (10) are designed to be flame-retardant.

6. Support element as claimed in one of the preceding claims, **characterised in that** at least one powdered flame-retardant (35, 36) is added to the expanded foam or the latter is impregnated therewith.

7. Support element as claimed in claim 6, **characterised in that** the flame-retardant (35, 36) is a hydrate or a hydroxide, such as an aluminium hydroxide or a hydrate of a zinc salt.

8. Support element as claimed in claim 6 or 7, **characterised in that** the flame-retardant (35, 36) has elements which release nitrogen oxides at higher temperatures and is provided in the form of melamine or ammonium polyphosphate.

9. Support element as claimed in one of claims 6 to 8, **characterised in that** the flame-retardant (35, 36) expands in volume at higher temperatures and is carbon or graphite.

10. Support element as claimed in one of claims 6 to 9, **characterised in that** the quantity of powdered flame-retardant (35, 36) of one component of the support element (10) is between 15 parts by weight and 50 parts by weight, preferably between 20 parts by weight and 40 parts by weight.

11. Support element as claimed in one of claims 6 to 10, **characterised in that** the flame-retardant (35, 36) contains elements which release halogens at higher temperatures and is made from organic phosphoric acid compounds.

12. Support element as claimed in claim 11, **characterised in that** the quantity of flame-retardant (35, 36) which releases halogens in one component of the support element (10) is between 1 part by weight and 20 parts by weight, preferably between 5 parts by weight and 12 parts by weight.

13. Support element as claimed in one of the preceding claims, **characterised in that** the components with a compressive hardness of between 30 kPa and 100 kPa and 6 kPa to 25 kPa extend from the bottom face (27) towards the bearing surface (26) or seat surface and are disposed immediately adjacent to one another.

14. Support element as claimed in claim 13, **characterised in that** the components are of an identical height (46) perpendicular to the bottom face (27) and preferably consist of solid sections running parallel with one another and disposed adjacent to one another.

15. Support element as claimed in claim 13 or 14, **characterised in that** the components in the support region of the support element (10) are disposed on the bearing frame (2).

16. Support element as claimed in one of the preceding claims, **characterised in that** the individual components are arranged one on top of the other perpendicular to the bottom face (27) of the support element (10).

17. Support element as claimed in one of the preceding claims, **characterised in that** a support mechanism (40) is inserted or embedded in the component having a density of between 15 kg/m³ and 90 kg/m³ and a hardness of between 150 N and 550 N.

18. Support element as claimed in claim 17, **characterised in that** the support mechanism (40) is provided in the form of a spring core (41), in particular made from a stainless steel, or an expanded foam of a higher hardness.

19. Support element as claimed in one of the preceding claims, **characterised in that** at least certain regions of the support element (10) or the component constituting it is covered by an at least single-layered protective layer (12).

20. Support element as claimed in claim 19, **characterised in that** the protective layer (12) is provided in the region of the bottom face (27) of the support element (10).

21. Support element as claimed in claim 19 or 20, **characterised in that** the protective layer (12) is provided in the region of at least one of the side faces (28 to 31) of the support element (10).

22. Support element as claimed in one of claims 19 to 21, **characterised in that** the protective layer (12) is provided starting from at least one of the side faces (28 to 31) of the support element (10) and is fitted around at least certain regions of the top face (25) of the support element (10).

23. Support element as claimed in one of claims 19 to 22, **characterised in that** the protective layer (12) is provided in the region of the top face (25) of the support element (10).

24. Support element as claimed in one of claims 19 to 23, **characterised in that** the two protective layers (12) in the region between the side faces (28 to 31) and the top face (25) of the support element (10) overlap with one another.

25. Support element as claimed in one of claims 19 to 24, **characterised in that** the two protective layers (12) overlap with one another in the region between the side faces (28 to 31) and the bottom face (27) of the support element (10).

26. Support element as claimed in one of claims 19 to 25, **characterised in that** the protective layer (12) covers the bottom face (27), the side faces (28 to 31) and optionally certain regions of the top face (25) of the support element (9; 10)

27. Support element as claimed in one of claims 19 to 23, **characterised in that** the protective layer (12) is made in a single piece.

28. Top element (9) for a seat padding (4), in particular for a car or aircraft seat, having at least one component made from an expanded foam, the top element (9) having a top face (14) which forms a seating surface, a bottom face (15) remote therefrom forming a bearing surface (16) and front and rear as well as side faces (17 to 20) extending in between, **characterised in that** at least one component of the top element (9) is made from an expanded foam with a density or weight by volume of between 30 kg/m³ and 100 kg/m³, preferably between 40 kg/m³ and 70 kg/m³, and a hardness of between 120 N and 450 N, preferably 180 N to 220 N, with a compressive hardness of between 1 kPa to 15 kPa with a 40% indentation depth.

29. Top element as claimed in claim 28, **characterised in that** the expanded foam of at least one component is a polyurethane foam with a preferably open cell foam structure and/or a polyimide foam and/or a polyether foam and/or silicone or silicone elastomer foam.

30. Top element as claimed in claim 28 or 29, **characterised in that** a bearing part (13) of the top element (9) is part of a foam block.

31. Top element as claimed in one of claims 28 to 30, **characterised in that** at least individual components of the top element (9) are flame-retardant.

32. Top element as claimed in one of claims 28 to 31, **characterised in that** a powdered flame-retardant (35, 36) is added to the expanded foam or the latter is impregnated therewith.

33. Top element as claimed in claim 32, **characterised in that** the flame-retardant (35, 36) is a hydrate or a hydroxide, such as an aluminium hydroxide or a hydrate of a zinc salt.

34. Top element as claimed in claim 32 or 33, **characterised in that** the flame-retardant (35, 36) has elements which release nitrogen oxides at higher temperatures and is provided in the form of melamine or ammonium polyphosphate.

35. Top element as claimed in one of claims 32 to 34, **characterised in that** the flame-retardant (35, 36) expands in volume at higher temperatures and is carbon or graphite.

36. Top element as claimed in one of claims 32 to 35, **characterised in that** the quantity of powdered flame-retardant (35, 36) of one component of the top element (9) is between 15 parts by weight and 50 parts by weight, preferably between 20 parts by weight and 40 parts by weight.

37. Top element as claimed in one of claims 32 to 36, **characterised in that** the flame-retardant (35, 36) contains elements which release halogens at higher temperatures and is made from organic phosphoric acid compounds.

38. Top element as claimed in claim 37, **characterised in that** the quantity of flame-retardant (35, 36) in one component of the top element (9) which releases halogens is between 1 part by weight and 20 parts by weight, preferably between 5 parts by weight and 12 parts by weight.

39. Top element as claimed in one of claims 28 to 38, **characterised in that** it or the component constituting it is covered by an at least single-layered protective layer (12) at least in certain regions.

40. Top element as claimed in claim 39, **characterised in that** the protective layer (12) is provided in the region of at least one of the side faces (17 to 20).

41. Top element as claimed in claim 39 or 40, **characterised in that** the protective layer (12) is provided starting from at least one of the side faces (17 to 20) extending over at least certain regions of the top face (14).

42. Top element as claimed in one of claims 39 to 41, **characterised in that** the protective layer (12) is provided starting from at least one of the side faces (17 to 20) and extends across at least certain regions of the bottom face (15) or bearing surface (16) of the bearing part (13).

43. Top element as claimed in one of claims 39 to 42, **characterised in that** the protective layer (12) is provided in the region of the top face (14).

44. Top element as claimed in one of claims 39 to 43, **characterised in that** the protective layer (12) is provided in the region of the bottom face (15) or bearing surface (16).

45. Top element as claimed in one of claims 39 to 44, **characterised in that** the protective layer (12) covers the top face (14) and at least the front and rear side face (17, 18) of the bearing part (13) and extends round the bottom face (15) in the direction opposite the top face (14).

46. Top element as claimed in one of claims 39 to 45, **characterised in that** the protective layers (12) provided in the region between the side faces (17 to 20) and the top face (14) mutually overlap.

47. Top element as claimed in one of claims 39 to 46, **characterised in that** the protective layers (12) provided in the region between the side faces (17 to 20) and the bottom face (15) mutually overlap.

48. Top element as claimed in one of claims 39 to 45, **characterised in that** the protective layer (12) is made in a single piece.

49. Top element as claimed in one of claims 28 to 48, **characterised in that** a centring arrangement (60) is provided between the bottom face (15) of the top element (9) and the top face (25) of the support element (10) directed towards it in order to position the two elements relative to one another.

50. Top element as claimed in one of claims 28 to 49, **characterised in that** a connecting element (37) is provided between the top element (9) and the support element (10) in the region of at least two mutually facing side faces (17 to 20 or 28 to 31) to provide a reciprocal connection.

51. Seat padding for a car seat or aircraft seat consisting of a top element (9) and a support element (10) which form a supporting body (11) and are joined to one another, if necessary detachably, by their mutually facing bearing surfaces (16, 26), as claimed in one of claims 1 to 50.

52. Seat padding as claimed in claim 51, **characterised in that** the at least single-layered protective layer (12) is provided as a covering material (62) and covers the top face (14) and at least one of the side faces (17 to 20) of the top element (9) and at least one of the side faces (28 to 31) of the support element (10).

53. Seat padding as claimed in claim 51 or 52, **characterised in that** the protective layer (12) is fitted round certain regions of the bottom face (27) of the support element (10).

54. Seat padding as claimed in one of claims 51 to 53, **characterised in that** the protective layer (12) is joined to the supporting body (11) of the seat padding (4), detachably if necessary.

55. Seat padding as claimed in one of claims 51 to 54, **characterised in that** at least certain regions of the supporting body (11) are also covered by another protective layer (12) provided in the form of a flame-retardant covering material (62).

56. Seat padding as claimed in claim 55, **characterised in that** the covering material (62) covers the top face (14) as well as the side faces (17 to 20) of the top element (9).

57. Seat padding as claimed in claim 55 or 56, **characterised in that** the covering material (62) covers the side faces (28 to 31) of the support element (10) and is fitted round the bottom face (27) thereof.

58. Seat padding as claimed in claim 55 or 57, **characterised in that** the covering material (62) is held on the support element (10) by a connecting means, detachably if necessary.

## Revendications

1. Elément de support (10) pour un rembourrage de siège (4), notamment pour un siège de véhicule ou d'avion, avec au moins une pièce de construction en mousse de matière synthétique, où l'élément de support (10) présente un côté supérieur (25) qui forme une face d'appui (26), un côté inférieur (27) éloigné de celle-ci ainsi que des faces latérales avant respectivement arrière et latérales (28 à 31) s'étendant entre celles-ci, **caractérisé en ce qu'**au moins une pièce de construction de l'élément de support (10) est formée par une mousse de matière synthétique PUR d'une densité entre 15 kg/m³ et 90 kg/m³, de préférence de entre 60 kg/m³ et 70 kg/m³, d'une dureté entre 150 N et 550 N, de préférence 400 N, pour un durcissement sous efforts entre 1 kPa à 20 kPa, de préférence entre 5 kPa à 10 kPa, à une profondeur d'enfoncement de 40%.

2. Elément de support selon la revendication 1, **caractérisé en ce que** la dureté d'au moins une pièce de construction de l'élément de support (10) qui est réalisée pour l'appui sur un châssis de support (2), est comprise entre 800 N et 4000 N et un durcissement sous efforts est compris entre 30 kPa et 100 kPa à 40% de profondeur d'enfoncement.

3. Elément de support selon la revendication 1 ou 2, **caractérisé en ce qu'**au moins une pièce de construction de l'élément de support (10) est réalisée en une mousse de matière synthétique d'une densité respectivement d'un poids spécifique entre 50 kg/m³ et 80 kg/m³, de préférence entre 60 kg/m³ et 70 kg/m³ et est réalisée par une mousse PUR à alvéoles ouverts à base d'ester d'un comportement visco-élastique et présente un durcissement sous efforts entre 6 kPa et 25 kPa.

4. Elément de support selon la revendication 3, **caractérisé en ce que** le durcissement sous efforts de la mousse de matière synthétique est compris entre 11 kPa et 25 kPa, de préférence entre 15 kPa et 20 kPa, à une profondeur d'enfoncement de 40%.

5. Elément de support selon l'une des revendications précédentes, **caractérisé en ce qu'**au moins des pièces de construction individuelles de l'élément de support (10) sont réalisées pour être ignifuges.

6. Elément de support selon au moins l'une des revendications précédentes, **caractérisé en ce qu'**il est ajouté à la mousse de matière synthétique au moins un agent pare-flammes pulvérulent (35, 36) ou que celle-ci en est imprégnée.

7. Elément de support selon la revendication 6, **caractérisé en ce que** l'agent pare-flammes (35, 36) est un hydrate ou un hydroxyde, comme un hydroxyde d'aluminium ou un hydrate d'un sel de zinc.

8. Elément de support selon la revendication 6 ou 7, **caractérisé en ce que** l'agent pare-flammes (35, 36) présente des composants libérant, lors d'une augmentation de la température, des oxydes d'azote et est formé par de la mélamine ou du polyphosphate d'ammonium.

9. Elément de support selon l'une des revendications 6 à 8, **caractérisé en ce que** l'agent pare-flammes (35, 36), lors d'une augmentation de la température, agrandit le volume et est formé par du carbone ou du graphite.

10. Elément de support selon l'une des revendications 6 à 9, **caractérisé en ce que** la quantité de l'agent pare-flammes pulvérulent (35, 36) représente entre 15 parties en poids et 50 parties en poids, de préférence entre 20 parties en poids et 40 parties en poids, d'une pièce de construction de l'élément de support (10).

11. Elément de support selon l'une des revendications 6 à 10, **caractérisé en ce que** l'agent pare-flammes (35, 36), lors d'une augmentation de la température, présente des composants libérant des halogènes et est formé par des compositions organiques d'acide phosphorique.

12. Elément de support selon la revendication 11, **caractérisé en ce que** la quantité de l'agent pare-flammes (35, 36) qui libère des halogènes, représente entre 1 partie en poids et 20 parties en poids, de préférence entre 5 parties en poids et 12 parties en poids, d'une pièce de construction de l'élément de support (10).

13. Elément de support selon l'une des revendications précédentes, **caractérisé en ce que** les pièces de construction d'un durcissement sous efforts entre 30 kPa et 100 kPa et 6 kPa à 25 kPa s'étendent depuis le côté inférieur (27) en direction de la face d'appui (26) respectivement de la face d'assise et sont directement avoisinantes.

14. Elément de support selon la revendication 13, **caractérisé en ce que** les pièces de construction ont perpendiculairement au côté inférieur (27) une même hauteur (46) et sont constituées de préférence de profilés pleins s'étendant parallèlement les uns aux autres et disposés les uns à côté des autres.

15. Elément de support selon la revendication 13 ou 14, **caractérisé en ce que** les pièces de construction sont disposées dans la zone d'appui de l'élément de support (10) au châssis de support (2).

16. Elément de support selon l'une des revendications précédentes, **caractérisé en ce que** les pièces de construction individuelles sont disposées dans la direction perpendiculairement au côté inférieur (27) de l'élément de support (10) les unes au-dessus des autres.

17. Elément de support selon l'une des revendications précédentes, **caractérisé en ce qu'**il est placé ou noyé dans la pièce de construction d'une densité entre 15 kg/m³ et 90 kg/m³ et d'une dureté entre 150 N et 550 N un dispositif de soutien (40).

18. Elément de support selon la revendication 17, **caractérisé en ce que** le dispositif de soutien (40) est formé par un noyau hélicoïdal (41), notamment en acier inoxydable ou par une mousse de matière synthétique d'une dureté plus élevée.

19. Elément de support selon l'une des revendications précédentes, **caractérisé en ce que** l'élément de support (10) respectivement la pièce de construction formant celui-ci est recouvert au moins par zones par une couche de protection (12) à au moins une couche.

20. Elément de support selon la revendication 19, **caractérisé en ce que** la couche de protection (12) est disposée au voisinage du côté inférieur (27) de l'élément de support (10).

21. Elément de support selon la revendication 19 ou 20, **caractérisé en ce que** la couche de protection (12) est disposée au voisinage d'au moins l'une des faces latérales (28 à 31) de l'élément de support (10).

22. Elément de support selon l'une des revendications 19 à 21, **caractérisé en ce que** la couche de protection (12), en partant d'au moins l'une des faces latérales (28 à 31) de l'élément de support (10), est disposée en passant au moins par zones sur le côté supérieur (25) de l'élément de support (10).

23. Elément de support selon l'une des revendications 19 à 22, **caractérisé en ce que** la couche de protection (12) est disposée au voisinage du côté supérieur (25) de l'élément de support (10).

24. Elément de support selon l'une des revendications 19 à 23, **caractérisé en ce que** les deux couches de protection (12) sont disposées de façon à se chevaucher dans la zone entre les faces latérales (28 à 31) et le côté supérieur (25) de l'élément de support (10).

25. Elément de support selon l'une des revendications 19 à 24, **caractérisé en ce que** les deux couches de protection (12) sont disposées pour se chevaucher dans la zone entre les faces latérales (28 à 31) et le côté inférieur (27) de l'élément de support (10).

26. Elément de support selon l'une des revendications 19 à 25, **caractérisé en ce que** la couche de protection (12) recouvre le côté inférieur (27), les faces latérales (28 à 31) et le cas échéant par zones le côté supérieur (25) de l'élément de support (9 ; 10).

27. Elément de support selon l'une des revendications 19 à 23, **caractérisé en ce que** la couche de protection (12) est réalisée en une pièce.

28. Elément rapporté (9) pour un rembourrage de siège (4), notamment un siège de véhicule ou d'avion, avec au moins une pièce de construction en une mousse de matière synthétique, où l'élément rapporté (9) présente un côté supérieur (14) qui forme la face d'assise, un côté inférieur (15) éloigné de celle-ci qui forme une face d'appui (16) ainsi que des faces latérales avant respectivement arrière et latérales (17 à 20) s'étendant entre celles-ci, **caractérisé en ce qu'**au moins une pièce de construction de l'élément rapporté (9) est formée en une mousse de matière synthétique d'une densité respectivement d'un poids spécifique entre 30 kg/m³ et 100 kg/m³, de préférence entre 40 kg/m³ et 70 kg/m³ et présente une dureté entre 120 N et 450 N de préférence entre 180 N à 220 N, avec un durcissement sous efforts de 1 kPa à 15 kPa pour une profondeur d'enfoncement de 40%.

29. Elément rapporté selon la revendication 28, **caractérisé en ce que** la mousse de matière synthétique d'au moins une pièce de construction est formée par une mousse de polyuréthanne d'une structure de mousse de préférence à alvéoles ouverts et/ou une mousse de polyimide et/ou une mousse de polyéther et/ou une mousse de silicone ou mousse d'élastomère à silicone.

30. Elément d'appui selon la revendication 28 ou 29, **caractérisé en ce qu'**une pièce d'appui (13) de l'élément rapporté (9) est formée par une partie d'un bloc de mousse.

31. Elément rapporté selon l'une des revendications 28 à 30, **caractérisé en ce qu'**au moins des pièces de construction individuelles de l'élément rapporté (9) sont réalisées d'une manière ignifuge.

32. Elément rapporté selon l'une des revendications 28 à 31, **caractérisé en ce qu'**il est ajouté à la mousse de matière synthétique au moins un agent pare-flammes pulvérulent (35, 36) ou que celle-ci en est imprégnée.

33. Elément rapporté selon la revendication 32, **caractérisé en ce que** l'agent pare-flammes (35, 36) est un hydrate ou un hydroxyde, comme un hydroxyde d'aluminium ou un hydrate d'un sel de zinc.

34. Elément rapporté selon la revendication 32 ou 33, **caractérisé en ce que** l'agent pare-flammes (35, 36), lors d'une augmentation de la température, présente des composants libérant les oxydes d'azote et est formé par une mélamine ou un polyphosphate d'ammonium.

35. Elément rapporté selon l'une des revendications 32 à 34, **caractérisé en ce que** l'agent pare-flammes (35, 36), lors d'une augmentation de la température, agrandit le volume et est formé par du carbone ou du graphite.

36. Elément rapporté selon l'une des revendications 32 à 35, **caractérisé en ce que** la quantité de l'agent pare-flammes pulvérulent (35, 36) est comprise entre 15 parties en poids et 50 parties en poids, de préférence entre 20 parties en poids et 40 parties en poids d'une pièce de construction de l'élément rapporté (9).

37. Elément rapporté selon l'une des revendications 32 à 36, **caractérisé en ce que** l'agent pare-flammes (35, 36) présente des composants libérant, lors d'une augmentation de la température, des halogènes et est formé par des composés organiques d'acide phosphorique.

38. Elément rapporté selon la revendication 37, **caractérisé en ce que** la quantité de l'agent pare-flammes (35, 36) qui libère des halogènes, représente entre 1 partie en poids et 20 parties en poids, de préférence entre 5 parties en poids et 12 parties en poids d'une pièce de construction de l'élément rapporté (9).

39. Elément rapporté selon l'une des revendications 28 à 38, **caractérisé en ce que** celui-ci respectivement la pièce de construction formant celui-ci est recouvert au moins par zones par une couche de protection (12) présentant au moins une couche.

40. Elément rapporté selon la revendication 39, **caractérisé en ce que** la couche de protection (12) est disposée au voisinage d'au moins l'une des faces latérales (17 à 20).

41. Elément rapporté selon la revendication 39 ou 40, **caractérisé en ce que** la couche de protection (12), en partant d'au moins l'une des faces latérales (17 à 20), est disposée pour passer au moins par zones sur le côté supérieur (14).

42. Elément rapporté selon l'une des revendications 39 à 41, **caractérisé en ce que** la couche de protection (12) en partant d'au moins l'une des faces latérales (17 à 20), est disposée pour passer au moins par zones sur le côté inférieur (15) respectivement la face d'appui (16) de la partie d'appui (13).

43. Elément rapporté selon l'une des revendications 39 à 42, **caractérisé en ce que** la couche de protection (12) est disposée au voisinage du côté supérieur (14).

44. Elément rapporté selon l'une des revendications 39 à 43, **caractérisé en ce que** la couche de protection (12) est disposée au voisinage du côté inférieur (15) respectivement de la face d'appui (16).

45. Elément rapporté selon l'une des revendications 39 à 44, **caractérisé en ce que** la couche de protection (12) recouvre le côté supérieur (14) et au moins les faces latérales avant et arrière (17, 18) de la partie d'application (13) et passe sur le côté inférieur (15) dans la direction opposée au côté supérieur (14).

46. Elément rapporté selon l'une des revendications 39 à 45, **caractérisé en ce que** les couches de protection (12) qui sont disposées dans la zone entre les faces latérales (17 à 20) et le côté supérieur (14), se chevauchent mutuellement.

47. Elément rapporté selon l'une des revendications 39 à 46, **caractérisé en ce que** les couches de protection (12) qui sont disposées dans la zone entre les faces latérales (17 à 20) et le côté inférieur (15) se chevauchent mutuellement.

48. Elément rapporté selon l'une des revendications 39 à 45, **caractérisé en ce que** la couche de protection (12) est réalisée en une pièce.

49. Elément rapporté selon l'une des revendications 28 à 48, **caractérisé en ce qu'**il est disposé entre le côté inférieur (15) de l'élément rapporté (9) et le côté supérieur (25) de l'élément de support (10) pouvant être tourné vers celui-ci un dispositif de centrage (60) pour le positionnement des deux éléments l'un relativement à l'autre.

50. Elément rapporté selon l'une des revendications 28 à 49, **caractérisé en ce qu'**il est disposé entre l'élément rapporté (9) et l'élément de support (10) au voisinage d'au moins deux faces latérales orientées l'une vers l'autre (17 à 20 respectivement 28 à 31), un élément de liaison (37) en vue de la liaison mutuelle.

51. Rembourrage de siège pour un siège de véhicule ou un siège d'avion, constitué d'un élément rapporté (9) et d'un élément de support (10) qui forment un corps d'appui (11) et qui sont reliés à leurs faces d'appui (16, 26) orientées l'une vers l'autre en cas de besoin relâchablement, selon l'une des revendications 1 à 50.

52. Rembourrage de siège selon la revendication 51, **caractérisé en ce que** la couche de protection (12) à au moins une couche est réalisée comme tissu de revêtement (62) et recouvre le côté supérieur (14) et au moins l'une des faces latérales (17 à 20) de l'élément rapporté (9) et au moins l'une des faces latérales (28 à 31) de l'élément de support (10).

53. Rembourrage de siège selon la revendication 51 ou 52, **caractérisé en ce que** la couche de protection (12) passe par zones sur le côté inférieur (27) de l'élément de support (10).

54. Rembourrage de siège selon l'une des revendications 51 à 53, **caractérisé en ce que** la couche de protection (12) est reliée en cas de besoin relâchablement au corps de soutien (11) du rembourrage de siège (4).

55. Rembourrage de siège selon l'une des revendications 51 à 54, **caractérisé en ce que** le corps de soutien (11) est recouvert au moins par zones additionnellement par une autre couche de protection (12) formée par un tissu de revêtement ignifuge (62).

56. Rembourrage de siège selon la revendication 55, **caractérisé en ce que** le tissu de revêtement (62) recouvre le côté supérieur (14) ainsi que les faces latérales (17 à 20) de l'élément rapporté (9).

57. Rembourrage de siège selon la revendication 55 ou 56, **caractérisé en ce que** le tissu de revêtement (62) recouvre les faces latérales (28 à 31) de l'élément de support (10) ainsi que le côté inférieur (27) de celui-ci.

58. Rembourrage de siège selon la revendication 55 ou 57, **caractérisé en ce que** le tissu de revêtement (62) est retenu par un dispositif de liaison en cas de besoin relâchable à l'élément de support (10).
